# EUROPEAN PATENT APPLICATION

(11) **EP 4 349 917 A1**
(43) Date of publication of application: **10.04.2024**
(21) Application number: 22816102.2
(22) Date of filing: 31.05.2022
(51) Int. Cl.: C08L 83/12, C08G 77/46, C08K 5/06, C08L 71/00

(54) **MANUFACTURING METHOD FOR POLYETHER-POLYSILOXANE BLOCK COPOLYMER COMPOSITION, POLYETHER-POLYSILOXANE BLOCK COPOLYMER COMPOSITION, AND USE THEREFOR**

(30) Priority: 04.06.2021 JP 2021094164
(71) Applicant: Dow Toray Co., Ltd., Tokyo 140-8617 (JP)
(72) Inventor: PHAN Son Thanh, Ichihara-shi Chiba 299-0108 (JP); TAMURA Seiki, Ichihara-shi Chiba 299-0108 (JP); INAGAKI Hiroyuki, Ichihara-shi Chiba 299-0108 (JP)
(74) Representative: Murgitroyd & Company
(86) International application number: PCT/JP2022/022115
(87) International publication number: WO 2022/255356

(57) **Abstract**

PURPOSE

To provide a hydrosilylation reaction process, and the like for (AB)n-type polyether-modified silicone compositions having sufficient quality and foam conditioning properties even when a low-cost glycol ether compound is used as a raw material.

SOLUTION

A method of manufacturing a composition containing a polyether-polysiloxane block copolymer (A'), including step 1 of mixing raw material components including at least (a1) double terminated alkenyl polyether, and (N + S) a specific monovalent sodium carboxylate solution, step 2 of removing a solvent component (S) from the system, and a step of subjecting the raw material components to a hydrosilylation reaction (provided that the sum of component (a1), component (a2), and component (B'): = 100:40 to 80, and the amount of Na+ in component (N) with regard to Component (B') is added is within a range of 3.8 to 43 wt. ppm), as well as a foam-enhancing composition, and use thereof.

## Description

### TECHNICAL FIELD

The present invention relates to an improved hydrosilylation reaction process for manufacturing a composition containing a polyether-polysiloxane block copolymer having a specific structure and a glycol ether compound. The present invention also relates to a composition containing a polyether-polysiloxane block copolymer that contains a specific amount of a monovalent sodium carboxylate and has improved foam enhancing properties. Furthermore, the present invention relates to a surfactant and foam stabilizer for polyurethane foam (including a function as a foam controlling agent and foam stabilizing agent, same hereinafter) containing these compositions.

### BACKGROUND ART

A straight chain organopolysiloxane-polyether block copolymer obtained by hydrosilylation reacting (1) an organopolysiloxane containing a SiH group on both terminals and (2) a polyether having a C=C group on both terminals is known as a nonhydrolyzable (AB)n type polyether-modified silicone (Patent Documents 1, 2). These block copolymers were obtained by conducting a hydrosilylation reaction in toluene solvent, but the toluene is usually removed from the product system by a stripping process under heated or reduced pressure conditions because of the toxicity and high flammability risk. Similarly, a xylene solution containing the block copolymer is known or commercialized, but similarly has a problem of including a flammable and hazardous organic solvent.

In addition to disclosing an example of a solvent exchange method where synthesis of a copolymer is performed in toluene, polypropylene glycol which is a diluting agent is added, and then the toluene is removed by a stripping operation; Patent Document 3 also describes that polyols used in a urethane foam formulation can be used as a diluting agent. Furthermore, a commercially available foam stabilizer using a long chain alkylene benzene as a reaction solvent and diluent was described as a comparative example. The solvent exchange method is advantageous for lowering the viscosity of (AB)n type polyether-modified silicone foaming agents, improving handling, and reducing the VOC (Volatile Organic Compound) content of polyurethane foam, but there is a problem with low production efficiency due to foaming during solvent exchange. Long-chain alkylbenzenes have the advantage of simplifying the manufacturing process of foam stabilizers, but they remain in the polyurethane foam and cause high VOC; furthermore, there is a problem with migration (bleeding) from the final product.

Patent Document 4 relates to a method for manufacturing a siloxane-polyoxyalkylene copolymer by a hydrosilylation reaction under reduced pressure, and discloses (AB)n type polyether modified silicone compositions using IPP (isopropyl palmitate) as a reaction solvent and diluent. However, the ester oil represented by IPP has a problem of easily causing separation due to poor compatibility with the copolymer particularly at low temperature, and may cause VOC and migration from the urethane foam when contained in the foam stabilizer.

Similarly, Patent Document 5 discloses a technique for stably manufacturing a copolymer with a particularly high molecular weight of the nonhydrolyzable (AB)n type polyether-modified silicones or similar structures, without causing increased viscosity, gelling, and the like. Of these, examples were shown in which the copolymer was synthesized in liquid isoparaffin and then low-boiling substances such as unreacted substances were distilled off by stripping (however, most of the liquid isoparaffin remained as a diluent for the copolymer). However, liquid isoparaffins can cause VOCs and migration from urethane foams when included in foam stabilizers.

Patent Document 6 is an invention made to solve the problems related to Literatures 1 to 5, and discloses a composition containing (A) a nonhydrolyzable (AB) n type polyether-modified silicone and (B) a specific glycol ether compound in which terminal hydrogen is substituted with a hydrocarbon group having 1 to 8 carbon atoms and which has a secondary alcoholic hydroxyl group at the other terminal, a method for manufacturing the composition, a foam stabilizer containing the composition, and the like. This component (B) can be utilized as a reaction solvent and diluent for the production of the component (A), and is further incorporated into the urethane resin skeleton due to the reactivity of the hydroxyl group during the formation of the urethane foam, so that there is an advantage that the minimization of the VOC of the foam and the efficient production of the foam stabilizer can both be achieved.

Patent Document 7 proposes, as a solution to the problem that hydrosilylation of a SiH-containing compound and a compound having an olefinic unsaturated group at a terminal in the presence of a chloroplatinic acid catalyst cannot be sufficiently carried out because a considerable side reaction occurs in the presence of water or alcohols, carrying out the hydrosilylation in the presence of an aqueous buffer solution that maintains the pH of the system at 5 to 7 even in the presence of a strong acid.

Patent Document 8 discloses a method for manufacturing side-chain polyether-modified silicone wherein a hydrosilylation reaction of monoalkenyl polyether having a hydroxyl group at a terminal is performed in the presence of a carboxylic acid or carboxylate salt, in a solvent-free condition, using RCO₂M (M is selected from a group consisting of H, alkali metals, alkaline earth metals, ammonium ion and tetraalkylphosphonium ion, and R is a monovalent hydrocarbon group having 2 to 20 carbon atoms) as a reaction accelerant (or catalyst denaturant). In the example, 0.02-0.5 wt.% sodium propionate or sodium butyrate was used with regard to the monoallyl polyether, but the reaction system also contained 85% phosphoric acid solution used to neutralize the polysiloxane containing SiH groups, so the composition of the actual buffer system in this system was complex, and there was no description or suggestion of an industrially accessible buffer system or the effects of using a specific amount of buffer.

Patent Document 9 claims a process for preparing general side-chain polyether-modified silicone surfactants by a hydrosilation reaction in high-boiling-point polyols having no olefinically unsaturated groups, such as dipropylene glycol, and a mixture of the silicone surfactants and polyols, wherein the content of polyols in the mixture is at least 5 wt%, and the mixture contains at least 100 ppm of reaction accelerators, alkali or alkaline earth salts of C2 to C19 monovalent carboxylic acids. In the examples of this document, chloroplatinic acid in ethanol was used as the hydrosilation catalyst, and 550 ppm of sodium oleate (Example 7), 550 ppm of sodium butyrate (Example 8), or 550 ppm of potassium acetate was used as the buffer, based on the total mixture.

Patent Document 10 claims, as a surfactant composition for flexible polyurethane foams, a mixture containing 99.98 to 90 wt.% of a nonhydrolyzable side-chain polyether-modified silicone and 0.02 to 10 wt.% of an organic acid salt suitable for the same application. In this technique, the addition of the organic acid salt and the production step of the polyether-modified silicone are independent of each other, and the organic acid salt is added to the polyether-modified silicone as a solid or as an aqueous solution, and heating for reducing the water content is optional. The resulting surfactant composition is said to have improved height and breathability of the flexible polyurethane foam. The organic acid salts tested in the examples and the amounts added were sodium dodecylbenzenesulfonate: 0.2 to 1.6 wt%, sodium para-toluenesulfonate: 0.4 wt%, and sodium bis-(2,4,4-trimethylpentyl)phosphinate: potassium oleate: 0.4 wt%.

Patent Document 11 claims a method for manufacturing a general side chain-type polyether-modified silicone by hydrosilylation with a platinum catalyst in an organic solvent, which is characterized in that a polyether-modified silicone with reduced odor is obtained by using a high-purity monoalkenyl-terminated polyether with reduced peroxide value and total carbonyl content, and which includes a water distillation step after the reaction, addition of a predetermined amount of an antioxidant, and optionally addition of a buffer such that the pH when dissolved in water is 5.5 to 8. In this technique, the buffer is added after the polyether-modified silicone has been synthesized. In Reference Examples 1 to 4, an IPA solution of chloroplatinic acid was used as the catalyst, and a methanol solution of sodium acetate (100 wt. ppm as sodium acetate with respect to the polyether-modified silicone composition excluding the organic solvent) was used as the buffer agent.

Patent Document 12 discloses a solvent-free continuous production process by hydrosilylation of silicone copolymers utilizing a static mixed plug flow reactor. If the hydroxyl group at the polyether terminal is not blocked, it is recommended to use a buffer such as a carboxylate salt that has been pre-dissolved in the polyether and then introduced into the reactor. In Example 19, 100 wt. ppm sodium propionate was used with regard to the polyether. In Comparative Example 12 on the other hand, using exactly the same raw materials as in Example 19, two tank-type continuous reactors and one plug flow reactor were connected in this order to produce side-chain polyether modified silicone by continuously feeding the raw materials and discharging product.

Patent Document 13 discloses a polyorganosiloxane-polyoxyethylene block copolymer [specific (AB) n type polyether-modified silicone], a method for manufacturing the same, and a vesicle composition containing the same. In Examples 1 to 4, the (AB) n type polyether-modified silicones were prepared by performing a reaction in xylene under the presence of 484 to 688 ppm of sodium acetate using a dimethyl siloxane solution of 1, 3-diethenyl-1, 1, 3, 3-tetramethyldisiloxane platinum complex as a catalyst. In Examples 8 to 11, similar (AB) n type polyether-modified silicones were prepared by reacting with the same catalysts under the presence of 438 to 500ppm of sodium acetate in IPA-solvent. These reaction solvents were removed by a stripping operation after completion of the reaction.

Note that Patent Document 13 discloses a large number of reaction solvents that can be used as necessary in manufacturing the (AB)n copolymer, and also includes aliphatic hydrocarbons such as hexane, heptane, and the like, but the disclosure is simply non-limiting examples of a selectable solvent. In addition, many of these solvents are used in the manufacturing of (AB)n copolymers, but there are many solvents that are not practical because they inhibit reactions, cause reaction system non-uniformity and side-reactions, and the like, and a person of ordinary skill in the art would have to perform extensive testing in order to find an optimal solvent, and the reactivity and stability of the solvent would need to be verified, and there is no specific description whatsoever about selecting an appropriate solvent. In particular, (B) a specific glycol ether compound in which a terminal hydrogen is substituted with a hydrocarbon group having 1 to 8 carbon atoms and which has a secondary alcoholic hydroxyl group at the other terminal can be used as a synthesis reaction solvent and diluent of an (AB)n type polyether-modified silicone having a structure suitable as a main component of a foam stabilizer for polyurethane foam, thereby improving an industrial production process of the foam stabilizer, and realizing and benefiting fine cells of polyurethane foam due to good compatibility between the foam stabilizer and a premix liquid. Therefore, Patent Document 11 does not clearly teach the invention of Patent Document 6 and its technical advantages so that those skilled in the art can understand them.

Patent Document 14 disclosed a process for the production of polyether-modified silicones having a - SiOC - content of less than 1 mol%, which consists in hydrosilylating a polyether-having at least one terminal unsaturated aliphatic hydrocarbon group and having an alkali content of less than 50 ppm with an organohydrogensiloxane having an acid number of less than 0.005. In all of the experimental examples, it was reported that general side chain-type polyether-modified silicone synthesis reactions were carried out under solvent-free conditions, and the addition of sodium acetate in 13 ppm (Comparative Example 4) or potassium acetate in 15 ppm (Comparative Example 5) to the reaction system resulted in a delay in the reaction speed. This technique is based on the concept that a purified raw material having a low ionic impurity content is used for both the siloxane side and the polyether side involved in hydrosilylation to continuously maintain excellent reactivity without stagnation in the course of the reaction in the reaction system, thereby realizing stable and efficient production of a polyether-modified silicone. In addition, many usable reaction solvents have been disclosed, and monoethers of propylene glycol or dipropylene glycol have also been included, but there has been no mention of the specific problems and causes that occur when these are used as synthesis solvents for (AB)n type polyether-modified silicones. Therefore, the technical concept of Patent Document 14 is different from that of the present invention.

Patent Document 15 discloses a composition containing a general side chain-type polyether-modified silicone and a compound similar to (B), a method for manufacturing the composition, a foam stabilizer containing the composition, and the like. In this paragraph 0084, it is shown that a buffer such as a carboxylic acid alkali metal salt can be added for the purpose of suppressing a side reaction or the like, and a plurality of options regarding the addition method are presented. Further, it has been described that when a polar solvent is used to dissolve the salt, removal by a stripping operation can be optionally performed before the start of the main reaction or after the end of the main reaction. However, the type and method of use of the buffer is only a non-limiting disclosure, and no buffer was used in the Examples / Comparative Examples, and there was no information about the preferred amount of buffer component added. In addition, it is difficult to understand from Patent Document 15 that the above-mentioned specific problems occur when the low-priced raw material (B) is used as a synthetic solvent for the (AB) n type polyether-modified silicone (A); therefore, no concrete and specific means has been disclosed for the best solution thereof.

On the other hand, Patent Documents 1 to 15 taught the use of a buffer containing an alkali metal salt of a carboxylic acid in the process of manufacturing an (AB)n type polyether modified silicone and the like by hydrosilylation reaction, but did not describe nor suggest any specific test examples or associated technical effects of mixing a specific buffer solution in the raw material system before starting the reaction in order to improve the hydrosilylation reaction process, removing the buffer solvent, and then starting the reaction. In particular, in these documents, there was no description nor suggestion of examples and technical effects of an improved hydrosilylation reaction process to solve quality problems with regard to a composition containing as main components "(AB)n-type polyether-modified silicone" with a specific structure and "a specific glycol ether compound in which a terminal hydrogen is replaced by a hydrocarbon group having 1 to 8 carbon atoms and that has a secondary alcoholic hydroxyl group at the other terminal".

In addition, the role or expected effects of the buffer in Patent Documents 1 to 15 is based on the function of neutralizing acidic substances in the system (thereby inhibiting side reactions during manufacturing = promoting the main reaction or inhibiting changes over time after manufacturing and during product storage). In other words, the weak alkaline buffers in these documents are described as buffers, reaction accelerators, catalyst denaturants, additives for odor reduction, and the like, but the fundamental function demonstrated by these buffers is to neutralize or adjust the pH of the system, and there is no indication nor suggestion of the present inventors discovering a new function where a specific amount of sodium salt present in a small amount that can be dissolved in the composition will give the composition specifically enhanced surfactant and foam retention ability.

### RELATED ART DOCUMENTS

### Patent Documents

Patent Document 1: US Patent No. 3957842 (Japanese Unexamined Patent Application No. S56-22395)
Patent Document 2: US Patent No. 4,150,048
Patent Document 3: Japanese Unexamined Patent Application H08-156143
Patent Document 4: US Patent No. 5,869,727 (Japanese Unexamined Patent Application No. H11-116670)
Patent Document 5: Japanese Unexamined Patent Application No. 2006-282820 (Patent No. 4875314)
Patent Document 6: International Patent Application Publication 2016/166979 (U.S. Patent No. 10717872)
Patent Document 7: US Patent No. 3,398,174
Patent Document 8: US Patent No. 4,847,398 (Japanese Examined Patent Application H5-51619)
Patent Document 9: US Patent No. 4,857,583 (Japanese Unexamined Patent Application No. H1-87633)
Patent Document 10: US Patent No. 5,472,987 (Patent No. 2599237)
Patent Document 11: US Patent No. 5,696,192 (Japanese Unexamined Patent Application No. H9-202829)
Patent Document 12: US Patent No. 6,593,436
Patent Document 13: International Patent Application Publication 2005/103117
Patent Document 14: US Patent No. 8,008,407 (Patent No. 5101598)
Patent Document 15: International Patent Application WO 2018/074257 (US20200048427A1)

### SUMMARY OF THE INVENTION

### PROBLEM TO BE SOLVED BY THE INVENTION

As described above, the (AB)n type polyether-modified silicone can be designed to have an average molecular weight of a copolymer, and the surface activation performance, affinity to a urethane foam system, and the like can be controlled by the EO% or size of a polyether portion or by introducing a hydrophobic group or hydroxyl group to a terminal portion of a copolymer, and therefore it is expected that an excellent effect as a surfactant for foam stabilization or foam control can be expected in all polyurethane foam formulations other than high resilience foam which requires a foam stabilizer with a low molecular weight. However, conventionally known technology has the aforementioned problems with performance, production problems directly linked to industrial production cost, problems with application, and problems such as insufficient penetration into the market regardless of potential value due to these factors.

Although compositions containing (AB)n-type polyether-modified silicone and specific glycol ether compounds, foaming agents, and the like proposed by the present inventors in the aforementioned Patent Document 6 could suitably solve the above problems to some extent, the present inventors have found a new problem that the quality of the glycol ether compound greatly affects the quality of the composition when obtaining the composition. In other words, if an inexpensive glycol ether compound with high acid value is used, the entire composition may have low viscosity during the hydrosilylation reaction, resulting in reduced foam stabilizing properties, or the transparency (light transmittance) may be impaired, and the expected performance as a foam stabilizer may not be fully achieved.

In addition, in the present invention, the inventors have found a new problem and a solution not described in these patent documents. In recent years, in the production of microcellular foams, which is the main use of (AB)n type polyether-modified silicones, the foam retention capacity has become an important property required of the foam stabilizer. Specifically, there is a strong demand for a foam stabilizer for microcellular foams having strong foam retention because of the possibility of reducing the amount of foam stabilizer added (cost reduction) and the ease with which foams having acceptable physical properties can be obtained even when low-density foams are designed by increasing the amount of blowing agent, entrained gas, and the like (achieving energy savings by weight reduction).

A conventional method for improving foam retention is to design a foam stabilizer formulation so as to obtain a high-molecular-weight and high-viscosity product having a large n number, or in other words, to react the starting polyether and polysiloxane with a C = C / SiH molar ratio close to 1.0. However, with this method, it is known that the viscosity of the obtained foam stabilizer is greatly affected by slight measurement errors of the raw materials, variation in quality between production lots, slight differences in manufacturing conditions, and the like, and there is a problem that the frequency of manufacturing off-specification products is high. In addition, a product with high viscosity has poor productivity and handleability, and this inevitably leads to a further increase in cost.

The technology of Patent Document 6 has provided some improvement to this complex and complicated problem, but leaves room for further improvement in terms of industrial simplicity and improvement in production efficiency. In particular, since a foam stabilizer is required to be inexpensively and industrially supplied in a large amount and stably, a foam stabilizer composition obtained by using a conventional technique requiring a high level of production control remains an unsolved problem in spreading the composition to the market.

In view of the demand from the market for silicone foam stabilizers for polyurethane foams and the widespread use of high-performance silicone foam stabilizers in the market, there is a strong demand for a foam stabilizer using an (AB)n type polyether-modified silicone, a process for manufacturing the foam stabilizer, and a formulation using the foam stabilizer, which has low cost, is not susceptible to measurement errors of raw materials and the effects of lots (acid value, and the like), can be produced stably and easily, has excellent cost-in-use and availability, and has sufficient performance for use as a foam stabilizer for polyurethane foams, in particular, foamability, foam-enhancing properties, foam-controlling properties, and foam stability in the foam system.

### MEANS FOR SOLVING THE PROBLEM

In order to solve the aforementioned problem, the present inventors have conducted diligent research and found that a method for manufacturing a composition containing a polyether-polysiloxane block copolymer (A') with a specific structure (hereinafter referred to as "the present production method" or "the production method of the present invention") including the following step 1 to step 3 can solve the aforementioned problem, and thus the present invention was achieved.

Step 1: A step of mixing raw material components including at least
(a1) polyether containing a double terminated alkenyl group, and
(N+S) sodium salt solution containing the following components (N) and (S),
(N) a monovalent sodium carboxylate having 2 to 18 carbon atoms; and
(S) one or more solvents selected from (S1) water and (S2) monohydric saturated alcohols with 1 to 4 carbon atoms;

### Step 2:

A step of removing the solvent (S) of Step 1 out of the system by heating and/or depressurization;
Step 3: A step of performing a hydrosilylation reaction of the aforementioned component (a1) and (a2) an organopolysiloxane containing terminating SiH groups on both ends in the presence of the aforementioned component (N), (B') a specific glycol ether compound, and a hydrosilylation reaction catalyst (however, when the total amount of component (a1), component (a2), and component (B') is 100 parts by weight, the amount of component (B') used is in a range of 40 to 80 parts by weight, and the amount of sodium cation (Na⁺) in component (N) relative to the amount of component (B') used is 3.8 to 43 ppm by weight.)

The present production method can and is preferably performed in a single reaction vessel for steps 1 to 3 above. Step 1 may also include a step of mixing raw material components including other raw material components, so long as the aforementioned component (a1) and component (N+S) are mixed. However, in Step 1, it is highly desirable that the aforementioned component (a2) and the hydrosilylation reaction catalyst do not coexist in the raw material system.

The present production method may further include: a step of filtering the composition after the hydrosilylation reaction; a step of adding a polyether compound compatible with the aforementioned components (A') and (B') and selected from the specific components (C1) to (C3) after the hydrosilylation reaction, and mixing and homogenizing; and a step of adding an antioxidant at optional timing.

Furthermore, the present inventors found that the aforementioned problem can be solved by a composition with foam enhancing properties containing (A") a polyether-polysiloxane block copolymer having a specific structure, (B') a specific glycol ether compound, and (N) a monovalent sodium carboxylate having 2 to 18 carbon atoms, wherein the mass ratio of component (A") : component (B") is in a range of 20:80 to 60:40, and the amount of sodium cation (Na⁺) in component (N) relative to the sum of component (A") and component (B') is in a range of 0.6 to 6.7 wt. ppm (hereinafter referred to as "the present foam enhancing composition"), and by a use thereof.

Furthermore, the above problems are solved by a surfactant, a foam stabilizer for polyurethane foam, or a premix liquid for polyurethane foam (hereinafter referred to as "surfactant and the like") containing the composition obtained by the present invention. Similarly, the above problems are solved by a method for manufacturing a surfactant or the like including the present manufacturing method, a composition for forming a polyurethane foam including the present composition or the present composition obtained by the above manufacturing method, and a polyurethane foam using the composition as a raw material.

### EFFECT OF THE INVENTION

The manufacturing method of the present invention can provide: a method of manufacturing (AB)n-type polyether-modified silicone compositions including an improved hydrosilylation reaction process, that is less susceptible to the effects of raw material quality and lot variation errors and lot effects, and that can stably and easily manufacture the composition at low cost, is not easily affected by raw material measurement errors and lot differences (such as acid number or the like), that has excellent cost-in-use and availability, and with sufficient performance in applications such as foam stabilizers for polyurethane foam; and a use in applications such as foam stabilizers for compositions obtained by the aforementioned method of manufacturing.

In particular, even when an inexpensive glycol ether compound is used as a raw material, the production method of the present invention can provide an (AB)n polyether-modified silicone composition having the same quality and performance as a foam stabilizer as when an expensive glycol ether compound with a very low acid value is used as a raw material. Therefore, a surfactant or the like (especially a foam stabilizer) that uses a high performance (AB)n polyether-modified silicone as a main component can be manufactured stably and in mass quantity at low cost, which can be expected to be widely used in the market.

In addition, an (AB)n polyether-modified silicone composition that can be stably and easily produced at a low cost, that has excellent cost-in-use and availability, and that has sufficient performance for use as a foam stabilizer for polyurethane foam, particularly foaming properties, foam-enhancing properties, foam-controlling properties, and foam stability in a foam system, can be provided by the composition with foam enhancing properties according to the present invention.

More specifically, the present invention can provide a new polyether-polysiloxane block copolymer composition with excellent fine cell formability, foam retention, foaming capability, and foam volume, that has excellent homogeneity and stability in a premixed solution, and that has excellent compatibility with the various components in a foam-forming emulsion composition in various fields such as high-density microcellular foam using a mechanical foaming method, other hard foams and soft foams, and the like. Furthermore, a foam stabilizer for a polyurethane foam containing the composition can be provided.

Note that even though the composition of the present invention is an (AB) n type polyether-modified silicone foam stabilizer with a low viscosity or a not so large molecular weight, use of the aforementioned component (A"), component (B") and a specific amount of component (N) can provide particularly strong surface activity and excellent foam retention ability, so practically sufficient performance can be ensured even without setting the C = C / SiH molar ratio to a condition close to 1.0 at the time of manufacturing, and there is an advantage that production control is easy.

### BRIEF DESCRIPTION OF THE DRAWINGS

FIG. 1 is a diagram depicting the relationship between the amount [ppm] of sodium ion (Na) added to the BDPG and the rate of change in viscosity of the polyether-polysiloxane block copolymer composition, and the corresponding target level.
FIG. 2 is a diagram depicting the relationship between the amount [ppm] of sodium ion (Na) and the foam retention [cm] of the polyether-polysiloxane block copolymer composition, and the corresponding target level.

### DESCRIPTION OF THE PREFERRED EMBODIMENTS

The following is a detailed description of the method of manufacturing the composition containing a polyether-polysiloxane block copolymer by an improved hydrosilylation reaction process. First, each of the raw materials used in the production of the aforementioned composition will be described, including the relationship to the production process.

### [Raw material component (a1)]

Component (a1) is a polyether containing an alkenyl group at both terminals as expressed by the following general Formula (1):

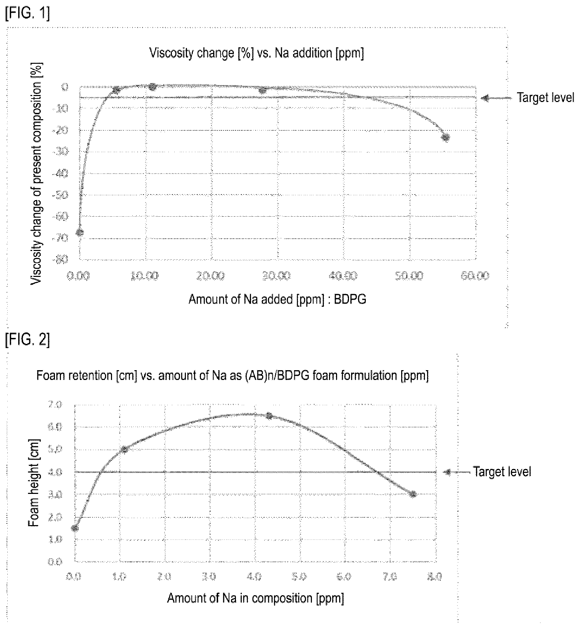

[Chem. Fig. 1] Y-O(CₓH₂ₓO)_{y}-Y

(wherein x is a number 2 to 4, y represents a number such that the molecular mass of the polyether moiety expressed by (CₓH₂ₓO)y is in a range of 400 to 5000, Y represents a monovalent hydrocarbon group having 2 to 8 carbon atoms and having a reactive C = C group at a terminal, and the polyether moiety includes at least one oxypropylene group),
that provides the polyether-polysiloxane block copolymer (A') by a hydrosilation reaction with component (a2) described below.

Here, group Y can be selected from vinyl groups, allyl groups, methallyl groups, isoprenyl groups, hexenyl groups, octenyl groups and the like, but allyl groups and/or methallyl groups are particularly preferable. y is preferably a number such that the molecular weight of the polyether moiety expressed by (CₓH₂ₓO)_{y} is in a range of 1500 to 5000, and the mass ratio of oxyethylene (C₂H₄O) units in the entire polyether moiety is preferably on average within a range from 30 to 80%.

Component (a1) is generally produced by subjecting an alcoholate of a hydroxyl-terminated polyether and a strong alkali to a nucleophilic displacement reaction with an alkenyl halide, and then removing low-boiling substances, by-product salts, and the like. In this reaction, the blocking ratio of the hydroxyl group is not complete in many cases, and a slight amount of hydroxyl group is usually contained as an impurity in group Y. The blocking rate is preferably 90 mol% or higher, more preferably 95 mol% or higher, and particularly preferably 98 mol% or higher.

The amount of water contained in component (a1) is preferably 0.5 wt.% or less, more preferably 0.2 wt.% or less, and particularly preferably 0.1 wt. % or less. Since component (a1) tends to absorb moisture, a dehydrating treatment may be carried out in the reaction vessel before the hydrosilylation reaction is started in some cases.

In addition, component (a1) is susceptible to oxidative degradation, so an oxidation inhibitor may be added and dissolved in the raw materials in an amount of approximately 100 to 1000 ppm after completion of the synthesis of component (a1). One example of a suitable antioxidant is vitamin E.

### [Component (N + S)]

Component (N+S) is one of the characteristic components of the manufacturing method of the present invention, and is a buffer system that acts to neutralize trace amounts of acid derived from the raw material component (B') and other raw materials described below in particular, thereby suppressing side reactions when manufacturing the polyether-polysiloxane block copolymer (A') and enabling stable and efficient production of copolymer (A') with the desired design and quality, as well as compositions/foam stabilizers containing components (A') and (B') as main components. On the other hand, in this buffer system, the amount of component (B') used should be within a range of 40 to 80 parts by weight relative to the total 100 parts by weight of component (a1), component (a2), and component (B') to be described later, and the amount of component (N) to be described later should be within a range of 3.8 to 43 wt. ppm, calculated as sodium ions, relative to the actual amount of (B') used. If the above conditions are not satisfied or if other buffers are used, the objective of the present invention may not be fully achieved.

In addition, the manufacturing method of the present invention is particularly preferably a manufacturing method where the amount of sodium in the composition is in a range of 0.6 to 6.7 wt. ppm based on the total composition. This is because, in addition to the manufacturing advantages, the foam-enhancing effect described below can be realized when the product is within this range.

More specifically, component (N+S) is a sodium salt solution containing (N) monovalent sodium carboxylate having 2 to 18 carbon atoms and one or more solvents selected from (S1) water and (S2) monohydric saturated alcohol having 1 to 4 carbon atoms.

Component (N) is a buffer component, a monovalent sodium carboxylate having 2 to 18 carbon atoms, preferably one or more type of monovalent sodium carboxylate having 2 to 8 carbon atoms, and especially one or more type of the monovalent sodium carboxylate having 2 to 4 carbon atoms. Examples thereof include sodium acetate, sodium propionate, and sodium butyrate, but sodium acetate is most preferred.

Component (S) is one or more liquid compounds that are a solvent of component (N), selected from (S1) water and (S2) a monohydric saturated alcohol with 1 to 4 carbon atoms. By using the component (S), the sodium salt containing the counter anion can be uniformly and easily added and dispersed in the system. (S) preferably has excellent solubility with component (N), compatibility with other components, and excellent safeness, and may be a mixture of two or more types selected from components (S1) and (S2).

(S1) is water, and is preferably water containing little impurity such as ion-exchanged water, pure water, ultrapure water, purified water, distilled water, tap water, and the like.

Specific examples of (S2) include methanol, ethanol, n-propyl alcohol, isopropyl alcohol, n-butanol, and iso-butyl alcohol, and the like. Methanol or ethanol is preferable from the perspective of solubility of the salt, and ethanol or isopropyl alcohol is preferable from the perspective of safety.

The concentration of (N) sodium carboxylate in the sodium salt solution, which is the raw material component (N + S), depends on the solubility of the salt used in the solvent used, but for practical purposes, the concentration should be in a range of 0.5 to 20 wt.%, preferably 1 to 10 wt.%. (S1) water is often a good solvent for the monovalent sodium carboxylate having 2 to 18 carbon atoms, and depending on the type of the salt used as the buffer, the salt may be dissolved at a concentration of 30 wt.% or more. Such a high-concentration solution may be used as is, but it should be noted that the number of parts added as a solution becomes smaller, so the impact of a measurement error becomes larger. In addition, it is necessary to pay attention and take measures to ensure that the raw materials can be fed quantitatively without loss and that the raw material does not stagnate in the feed line. Furthermore, when preparing the raw material component (N+S), a method may be employed in which a high-concentration aqueous solution is first prepared, and then an appropriate amount of component (S2) a saturated monohydric alcohol having 1 to 4 carbon atoms is added to dilute.

A sodium salt solution containing component (S) is mixed into a raw material system containing at least component (a1). This enables a uniform and fine dispersion state to be achieved and acid impurities derived from the raw material system (especially raw material component (B') described below) to be effectively neutralized, as compared to when mixing component (N) as solid particles into the raw material system. Furthermore, this is also advantageous in terms of the appearance (transparency) of the product system after the completion of the hydrosilylation reaction, and has the advantage of lightening the burden on the subsequent filtration and purification processes.

In the present invention, component (S) is removed from the system by known means involving heating and/or depressurization, such as stripping, before the start of the hydrosilylation reaction, in order to prevent side reactions in the process after component (N) is added to the system. The mixture after removal of component (S) contains at least the above raw material component (N) and component (a1), with component (N) in a uniform and finely dispersed form in the mixture.

### [Raw material component (a2)]

Component (a2) is an organopolysiloxane containing a SiH group on both terminals, expressed by General Formula (2)

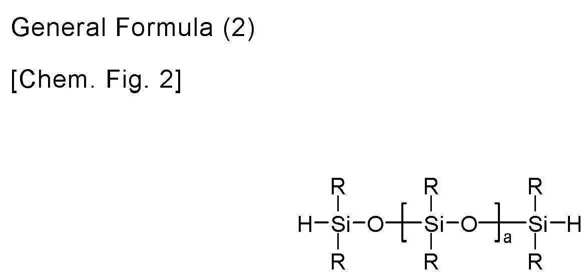

(where each R independently represents a monovalent hydrocarbon group having 1 to 9 carbon atoms and having no aliphatic unsaturated bonds, and a represents a number of 1 to 200), and provides the polyether-polysiloxane block copolymers (A') that are obtained by a hydrosilation reaction with the aforementioned component (a1).

Here, a particularly preferred R is a methyl group. In addition, from the viewpoint of usefulness and handleability of the produced foam stabilizer, a in the general formula (5) is preferably a number in a range of 10 to 45.

Component (a2) is usually produced by charging an organodisiloxane containing SiH groups at both ends and a low molecular weight cyclic diorganosiloxane in a desired molar ratio, polymerizing the mixture in the presence of an acidic catalyst, neutralizing the catalyst after reaching an equilibrated state, and removing neutral salts and the like. Due to the nature of the equilibration reaction, a low molecular weight cyclic diorganosiloxane corresponding to 10 to 15wt.% generally remains in the product system, in addition to the target organopolysiloxane having SiH groups at both terminals.

When the polyether polysiloxane block copolymer composition according to the present invention is used as an aromatic hydrocarbon-based solvent-free and low VOC/emission foam stabilizer for polyurethane foam, the composition preferably contains substantially no low molecular weight siloxanes with 20 or fewer silicon atoms.

On the other hand, the production efficiency of the manufacturing method of the present composition will be greatly improved if there is essentially no stripping process after the synthesis of the copolymer (in other words, after the hydrosilylation reaction). In particular, a stripping process after synthesizing the aforementioned copolymer is preferably avoided because it easily causes a severe foaming phenomenon due to depressurization. Therefore, low molecular weight siloxanes, particularly low molecular weight cyclic siloxanes, are preferably removed from component (a2) in advance. There are many methods for removing the low molecular weight siloxanes from Component (a2). Examples include: a method of treating under high temperature and high vacuum while an inert gas such as argon gas, nitrogen gas, or the like is blown in small amounts into an equilibrium mixture of organopolysiloxane containing an SiH group; a method of thinning the equilibrium mixture of organopolysiloxane containing an SiH group and then stripping under heating conditions of 50 to 130°C under a reduced pressure of 0.5 mm or less, for example; and a method of dissolving the low molecular weight siloxane in the equilibrium mixture of the organopolysiloxane containing an SiH group, adding an organic solvent that does not dissolve the high molecular weight siloxane, such as an organic solvent like methanol, ethanol, or acetone, and then extracting and removing the low molecular siloxanes.

Specifically, component (a2) preferably has a total content of 3000 ppm (by weight) or less of low molecular weight cyclic siloxane containing 6 or fewer silicon atoms, and 300 ppm (by weight) or less is particularly preferred. These low molecular weight cyclic siloxanes are typically cyclic dimethyl siloxanehose expressed by formula, [(CH₃)₂SiO]ₙ (where n is an integer from 3 to 10). Note that the amount of the low molecular weight siloxane in Component (a2) can be measured, for example, by adding an organic solvent to Component (a2) to dilute, and then analyzing the diluted solution by introducing to a gas chromatography analyzing device.

### [Component (B')]

Component (B') is one or more type of glycol ether compound where a terminal hydrogen is substituted by a hydrocarbon group having 1 to 8 carbon atoms, a secondary alcoholic hydroxyl group is provided on another terminal, the repeating number of oxyalkylene units with 2 to 4 carbon atoms is a number within a range of 1 to 3, and heteroatoms other than oxygen are not included. In the manufacturing method of the present invention, component (B') is introduced into the composition as a solvent in the synthesis reaction of component (A'), and has a function of improving the handleability of the composition, or in other words, a foam stabilizer, and the compatibility with other components used in combination in the polyurethane foam formulation.

Component (B') is preferably a monohydric organic compound having a boiling point where distillation or purification by distillation is possible, and examples of this compound include one or more types selected from glycol ethers propylene glycol monobutyl ethers, dipropylene glycol monobutyl ethers, tripropylene glycol monobutyl ethers, propylene glycol monomethyl ethers, dipropylene glycol monomethyl ethers, tripropylene glycol monomethyl ethers, propylene glycol monopropyl ethers, dipropylene glycol monopropyl ethers, tripropylene glycol monopropyl ethers, propylene glycol monoethyl ethers, dipropylene glycol monoethyl ethers, tripropylene glycol monoethyl ethers, and the like. Particularly preferred are one or more types of glycol ethers selected from dipropylene glycol monobutyl ether and tripropylene glycol monobutyl ether.

When a single glycol ether is used in the manufacturing method of the present invention, the purity is preferably at least 90 wt.% or higher. Preferably, the purity is 95 wt.% or higher, particularly preferably 98. 5 wt.% or higher. When a plurality of types of glycol ethers are used in combination as raw material iv), the purity of each glycol ether is preferably high as described above.

In addition, as described above, component (B') may contain a trace amount of an acidic substance depending on the manufacturer and the storage conditions, or the like. The amount of acidic substance in component (B') is preferably 0.02 wt.% or less, more preferably 0.01 wt.% or less, and especially preferably 0.001 wt.% or less.

The amount of water included in component (B') is preferably 0.5 wt.% or less, more preferably 0.2 wt.% or less, particularly preferably 0.1 wt.% or less. Component (B ') easily absorbs moisture, so a dehydration process may be performed in the reactor vessel before starting the hydrosilylation reaction, depending on the situation.

In the compositions obtained by the production method of the present invention, the mass ratio of component (A') : component (B') is in a range of 20:80 to 60:40. Therefore, it is important that the amount of component (B') used is within a range of 40 to 80 parts by weight for 100 parts by weight of the total of component (a1), component (a2) and component (B') as raw materials, from the perspective of performance, quality, convenience in use, workability (handling), and the like.

### [Raw material component: Hydrosilylation reaction catalyst]

In the manufacturing method of the present invention, the aforementioned component (a1) and component (a2) are hydrosilylated in the presence of an effective amount of hydrosilylation reaction catalyst to form component (A'). Here, the hydrosilylation reaction catalyst is not limited to a specific catalyst so long as it can promote the hydrosilylation reaction, and the catalyst can be appropriately selected from known hydrosilylation reaction catalysts and used in the present invention. Specific examples of the hydrosilylation reaction catalyst can include fine particulate platinum adsorbed on silica fine powder or a carbon powder carrier, chloroplatinic acids, alcohol-modified chloroplatinic acids, olefin complexes of chloroplatinic acid, coordinate compounds of chloroplatinic acid and vinyl siloxane, platinum such as platinum black, and the like.

In the manufacturing method of the present invention, a particularly preferable hydrosilylation reaction catalyst is a neutral platinum complex catalyst, and 1,3-divinyl-1,1,3,3-tetramethyldisiloxane platinum complex is particularly preferable. On the other hand, the use of an acidic hydrosilylation reaction catalysts such as platinum chloride or alcohol modified platinum chloride may require the use of or an increase of (N) a specific monovalent sodium carboxylate or other buffer that makes up a buffer system.

However, if the total mass of components (a1) and (a2) is taken as 100% by mass, the amount of metallic atoms (in particular, platinum group metallic atoms) in the hydrosilation catalysts is within a range of 0.1 to 200 ppm by mass, preferably 1 to 50 ppm by mass. This is because when the amount of hydrosilylation reaction catalyst is less than the lower limit, the copolymerization reaction may be insufficient, and if the amount exceeds the upper limit, coloring and transparency of the obtained composition may be adversely affected in addition to being uneconomical.

### [Raw material component: Antioxidant]

The polyether-polysiloxane block copolymer composition of the present invention is gradually oxidized and deteriorated by oxygen in the air. In order to prevent this, phenols, hydroquinones, benzoquinones, aromatic amines, vitamins, or other antioxidants can be and are preferably added to increase oxidation stability. For example, BHT (2,6-di-t-butyl-p-cresol), vitamin C, vitamin E, and the like can be used as the antioxidant.

The antioxidant is preferably within a range of 1 to 1000 wt. ppm, more preferably 50 to 500 wt. ppm, per 100 parts by mass of the sum of the components (A'), (B'), and optionally (C).

In the manufacturing method of the present invention, the timing of adding the antioxidant to the manufacturing raw material system is arbitrary, and the antioxidant can be added to the raw material or post-synthesis composition at any time, including before or after the hydrosilylation reaction, but it is especially preferable to add the antioxidant together with component (a1) described above to achieve the above quantitative range.

### [Raw material components: Other buffers]

In the manufacturing method of the present invention, the buffer system is a sodium carboxylate solution, which is component (N+S) described above, but optionally, it is also possible to use a buffer selected from:
(K) a potassium salt having a monovalent counter anion containing only carbon, hydrogen, and oxygen, having a number of carbon atoms in a range of 1 to 8, and not having a benzene ring structure; and
other buffers selected from alkali metal salts or alkaline earth metal salts.

For example, other potassium salts that can serve as buffers include, but are not limited to, potassium carbonate, potassium benzoate, potassium lactate, potassium laurate, potassium oleate, potassium bicarbonate, potassium acetate, potassium propionate, potassium butyrate, potassium isobutyrate, potassium 2-ethylhexanoate, and the like.

When adding a buffer, it is preferable to mix the buffer together with or separately from component (N) in the composition in the form of a buffer solution dissolved or dispersed in water and/or a monohydric saturated alcohol with 1 to 4 carbon atoms, which is component (S) described above. Note that the buffer may be used in solid form to the extent that it does not impair the technical effect of the invention.

### [Raw material components: other neutralizers]

In the manufacturing method of the present invention, a (poly)oxyalkylene tertiary amine compound expressed by the following general formula: 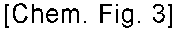 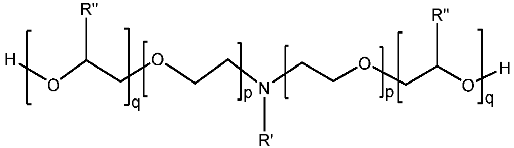
(where R' represents a monovalent hydrocarbon group having 1 to 18 carbon atoms, R" represents a methyl or ethyl group, p represents a number from 0 to 20, q represents a number from 1 to 20, and a bonding mode between one (poly)oxyethylene moiety and another (poly)oxyalkylene moiety can be random or block)
can be added in an appropriate amount as a neutralizing agent, in addition to the sodium salt solution which is Component (N+S).

These (poly)oxyalkylene tertiary amine compounds include, specifically, tertiary amine compounds expressed by the average molecular formula of R'N[(CH₂CH₂O)₄{CH₂CH(CH₃)O}₄H]₂ (where R' is a cocoalkyl group).

These buffers (including their dissolving or dispersing solvents) or neutralizers can be added to the manufacturing raw material system to the extent that they do not impair the technical effect of the manufacturing method of the present invention. In addition to the sodium salt solution, which is the component (N+S) described above, by using the buffer or neutralizing agent described above and conducting the hydrosilylation reaction in the presence thereof, it may be possible to further reduce the effects derived from the quality of component (B') and the like by neutralizing the acidic substances in the manufacturing raw material system, or the like, and foam-enhancing effects of the final composition may be realized depending on the type of additive.

### [Component (A')]

The method of manufacturing of the present invention is an improved hydrosilylation reaction process of component (a1) and component (a2) described above, providing a composition containing a polyether-polysiloxane block copolymer (A') with a specific structure. Component (A') synthesized by the present manufacturing method is a surfactant or other main agent and can be used as a foam stabilizer, especially for polyurethane foam.

Component (A') is one of the main components of the present composition and is a polyether-polysiloxane block copolymer having in a molecule a configuration unit represented by General Formula (3):

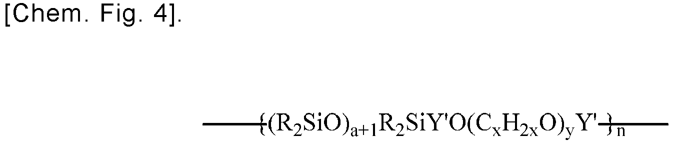

The terminal group of the component (A') is not particularly limited as long as it satisfies the above structure, but if component (A') is synthesized by the hydrosilylation reaction described later, the structure of the molecular chain terminal is preferably one or more type selected from:
Z¹: alkenyl groups, hydroxyl groups, alkoxy groups, or acetoxy groups bonded to a polyether moiety; and
Z²: monovalent hydrocarbon groups that do not have a hetero atom, hydroxyl groups, alkoxy groups, hydrocarbon oxyalkyleneoxy groups, or hydrogen atoms bonded to a silicon atom.

In the formula, R individually represents a monovalent hydrocarbon group with 1 to 9 carbon atoms that do not have an aliphatic unsaturated bond, and examples include alkyl groups with 1 to 9 carbon atoms. Industrially, methyl groups particularly preferable. Y' is a divalent hydrocarbon group having 2 to 8 carbon atoms bonded to an adjacent silicon atom via a carbon-silicon bond and bonded to a polyoxyalkylene block via an oxygen atom, preferably a divalent hydrocarbon group having 3 to 4 carbon atoms, and particularly preferably an isobutylene group.
a is a number of 1 to 200, x is a number of 2 to 4, y is a number such that the molecular mass of the polyether moiety expressed by (CₓH₂ₓO)_{y} is in a range of 400 to 5000, the polyether moiety contains at least one oxypropylene group, and n is a number that is at least 2.

From the perspective of use as a foam stabilizer and stability of the copolymer, one terminal or both terminals of the polyether-polysiloxane block copolymer is preferably blocked by a functional group including a polyether portion, and in this case, the terminal group is represented by Z1, and is preferably an alkenyl group, hydroxyl group, alkoxy group, or acetoxy group bonded to a polyether moiety, and is particularly preferably a methallyl group. Note that when an organopolysiloxane containing SiH groups at both terminals is used as the starting material for component (A'), some of the terminal SiH groups may react with the hydroxyl groups of component (B') described below, and some of the terminal groups may be glycol ether residual groups derived from component (B').

On the other hand, the terminal group of component (A') preferably does not include a reactive functional group having a hetero atom, and particularly preferably does not include a ring-opening reactive functional group which is an epoxy group, or an amine group, or the like.

Regarding Component (A'), the average molecular weight of the copolymer can be designed by adjusting the molar ratio (reaction ratio) between the organopolysiloxane containing a SiH group on both terminals and the polyether containing an alkenyl group on both terminals, which are raw materials. Furthermore, surface activating performance, affinity to a urethane foam system, and the like can easily be controlled based on the EO% or size of a polyether moiety, and introduction of a hydroxyl group or hydrophobic group to a copolymer terminal moiety. Therefore, the copolymer composition can be used in various types of polyurethane foam formulations with excellent effects as surfactants for foam control or bubble stabilization.

### [Particularly suitable component (A") and demonstration of specific foam-enhancing effects, and the like]

From the perspective of use as a foam stabilizer and handling properties of the copolymer, in the aforementioned General Formula (3), a is particularly preferably a number within a range of 10 to 45, y is particularly preferably a number where the molecular weight of a polyether (polyoxyalkylene) moiety is within a range of 1500 to 5000, and the mass ratio of oxyethylene (C₂H₄O) units configuring the entire polyether moiety is particularly preferably within a range of 30 to 80% on average. In the present invention, the polyether-polysiloxane block copolymer having a structure that satisfies the aforementioned conditions in general formula (3) is referred to as component (A") as a particularly preferred form.

In the aforementioned range, the balance of the hydrophilicity of the polyether-polysiloxane block copolymer is favorable, and a certain amount of oxypropylene units or oxybutylene units is inevitably included; therefore the range is advantageous for improving the compatibility between the foam stabilizer and polyol or isocyanate which is a main component of the polyurethane foam-forming composition, and for achieving increased convenience by improving the stability of a premixed solution, a desirable foam stabilizing effect, or the like. Function as a surfactant or foam stabilizer and handling properties during synthesis or after synthesis are also improved.

Furthermore, in compositions containing a polyether-polysiloxane block copolymer that is component (A") having a suitable structure, the aforementioned component (B') and component (N), additional advantages such as foam enhancing properties may be obtained if each component meets a quantitative relationship.

Specifically, component (A") and component (B') are contained in a mass ratio of component (A") : component (B') = 20 to 60 : 80 to 40 (where the total amount of component (A") and component (B') is set to 100). Furthermore, the composition containing a sodium salt of monovalent carboxylic acid with 2 to 18 carbon atoms in a range of 0.6 to 6.7 wt.% calculated as sodium, relative to the total amount of component (A") and component (B') has a specifically enhanced surfactant ability and foam retention ability, and is used as a surfactant, foam stabilizer for polyurethane foam, or a component of a premix solution for polyurethane foam.

### [Production method of the present invention: Steps 1 to 4]

The manufacturing method of the present invention requires the following Steps 1 to 3, and may also have an optional filtration step (Step 4). In particular, from the perspective of industrial productivity and ensuring the quality of the resulting composition, it is particularly preferable to perform these Steps 1 to 3 in a single reaction vessel in the manufacturing method of the present invention.

### [Step 1: Mixing raw material components]

Step 1 is a step of mixing at least the raw material components including raw material component (a1) which is the polyether containing an alkenyl group on both terminals, and component (N+S) which is the sodium salt solution. By using component (S), the sodium salt of component (N) is uniformly and finely dispersed in the raw material component (a1) and can effectively neutralize acid impurities derived from the raw material system (especially, the raw material component (B') described below). Furthermore, this is also advantageous in terms of the appearance (transparency) of the product system after the completion of the hydrosilylation reaction, and has the advantage of lightening the burden on the subsequent filtration and purification processes. The mixing method in Step 1 is not particularly limited as long as uniform mixing can be achieved. Mechanical mixing and stirring methods using a mixer, stirring blades, and the like are convenient.

Herein, Step 1 may include a step of mixing one or more of the above component (a1), component (N+S), and optionally, other raw material components. For example, component (a1) and the aforementioned antioxidant may be pre-mixed together with the aforementioned component (N + S), or additives such as component (a1), component (a2), component (B'), component (N + S), and an antioxidant may be pre-mixed, and this is not restricted in the manufacturing method of the present invention. However, it is preferred that component (a2) and the hydrosilylation reaction catalyst do not coexist in Step 1. This is because unexpected forms of hydrosilylation reactions and side reactions would be more likely to occur in Step 1 and Step 2. Therefore, it is preferable that the introduction of component (a2) and the hydrosilylation reaction catalyst into the feedstock system in Step 1 is selective, especially that the hydrosilylation reaction catalyst is not added to the feedstock system in Step 1. If the hydrosilylation reaction catalyst has excellent compatibility with component (a1) and is not deactivated by contact with component (N+S), the catalyst can be dissolved in component (a1) and used, but if this is not the case, caution should be exercised because a generation of scum and a decrease in reaction efficiency may occur due to coagulation of the catalyst.

It should be noted that the other raw material components may need to be changed depending on the raw material components mixed in Step 1. For example, if only component (a1), component (N+S), and the antioxidant are mixed in Step 1 and the solvent (S) is removed in Step 2 as described below, the mixture after removal of component (S) will be a mixture containing component (a1), component (N), and the antioxidant, so the other raw material components, namely component (a2), component (B'), and the hydrosilylation reaction catalyst are added to the mixture to carry out the hydrosilylation reaction in Step 3. On the other hand, if Step 1 is in the form of a mixture containing all raw material components other than the hydrosilylation reaction catalyst, it is sufficient to add only the unadded hydrosilylation reaction catalyst to the mixture after removing component (S), and then the hydrosilylation reaction in Step 3 can be performed.

### [Step 2: Removal of solvent (S)]

Step 2 is a step after Step 1, in which the solvent component (S) is removed from the system by known means involving heating and/or depressurization, such as stripping, for the purpose of preventing side reactions. If component (S) is not removed from the raw material in Step 2, the technical problem of preventing side reactions in the hydrosilylation reaction process may not be solved when an inexpensive, low-purity raw material component (B') is used. Note that the mixture after component (S) is removed contains at least the above raw material component (N) and component (a1), and component (N) takes the form of a uniform and fine dispersion in the mixture.

### [Step 3: Hydrosilylation reaction process]

Step 3 is a step of performing a hydrosilylation reaction of the aforementioned raw material components (N) and (a1) obtained in Step 2 in the presence of a solution containing the aforementioned component (B'), and a hydrosilylation reaction catalyst (however, when the total amount of component (a1), component (a2), and component (B') is 100 parts by weight, the amount of component (B') used is in a range of 40 to 80 parts by weight, and the amount of sodium cation (Na⁺) in component (N) relative to the amount of component (B') used is 3.8 to 43 ppm by weight). Herein, the amount of component (N) used is particularly preferred to be an amount in which the amount of sodium cation (Na+) is within a range of 0.6 to 6.7 wt. ppm with respect to the total amount of component (a1), component (a2), and component (B'). The hydrosilylation reaction process synthesizes (A') a polyether-polysiloxane block copolymer composition having in the molecule structural units expressed by general formula (3):

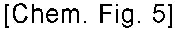

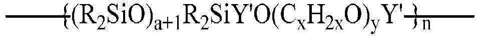

In the present invention, it is particularly preferable to obtain a polyether-polysiloxane block copolymer (A") having a structure that satisfies the above conditions in the general formula (3).

In the hydrosilation process of the present invention, the amount of terminal alkenyl groups (R-Vi) in component (a1) is preferably equal to or slightly in excess of the amount of silicon-bonded hydrogen atoms (Si-H) in component (a2), and more specifically, the amount ratio (molar ratio) represented by [R-Vi] / [Si-H] is preferably 1.0 to 1.5, particularly preferably 1.1 to 1.2.

The polyether-polysiloxane block copolymer composition of the present invention is as described above, but in general, there is a correlation in compatibility between the type of foam resin and silicones containing a polyether portion, which is a foam stabilizer, and when arranging from foam suitable for low molecular weight bodies to foam suitable for high molecular weight bodies, the order is high resilience foam < hard foam < soft foam < microcellular foam.

Furthermore, the structure of the polyether portion also greatly affects the size of the foam and the like, and therefore, techniques exist for increasing the molecular weight distribution of a polyether portion and the like, such as selecting a polyether structure with a high amount of EO if reduced cell size and air permeability are desired, selecting a polyether with a high molecular weight if foam stabilization and retention are desired, widening the processing range, using a plurality of polyethers with different molecular weights or structures in raw material in order to have compatibility with a wide range of applications and formulations, and the like, which can also be applied to the polyether-polysiloxane block copolymer composition of the present invention and to the manufacturing method thereof. Furthermore, a polyol which is one primary raw material of polyurethane has a PPG structure portion, and therefore, a PO (propyleneoxy) chain is often preferably also included in the polyether portion in the polyether-modified silicone from the perspective of compatibility in a foam formulation.

The requirements of the foam stabilizer will be different based on the type of polyurethane foam containing the "aromatic hydrocarbon solvent free (AB)n polyether modified silicone foam stabilizer", but for example, the surface activating performance, affinity to the urethane foam system, or the like can be controlled based on appropriately adjusting the chain length of the organopolysiloxane having a SiH group on both terminals as expressed by General Formula (2), the type of polyether having an alkenyl group on both terminals as expressed by General Formula (1), the reaction ratio between both components, and the EO/PO% or molecular weight of the polyether moiety; therefore, a suitable foam stabilizer can be freely designed as desired.

The hydrosilylation reaction conditions of the present invention can be arbitrarily selected, but the composition can be obtained by adding a small amount of an antioxidant such as tocopherol (vitamin E), or the like, and then heating and stirring at a temperature of room temperature to 200°C, and preferably 50 to 100°C, under an inert gas atmosphere such as nitrogen or the like. Note that the antioxidant may be added after the hydrosilylation reaction is completed. The reaction time can be selected based on the reaction scale, amount of catalyst used, and reaction temperature, and is generally within a range of several minutes to several hours. Furthermore, the reaction may be performed under reduced pressure in order to improve quality or the like, and for example, the reaction conditions proposed in Patent Document 4 (Japanese Unexamined Patent Application Publication H11-116670) can be applied without particularly limitation.

The end point of the hydrosilylation reaction can be confirmed by the disappearance of Si-H bond absorption by infrared spectroscopy (IR), or the absence of hydrogen gas generation by the following alkali decomposition gas generating method. Note that the silicon-bonded hydrogen atoms (Si-H) in the organopolysiloxane containing a SiH group on both terminals which is a reaction raw material can be analyzed by the same method, and therefore, the amount of hydrogen gas generation can be specified. The following is a summary thereof.

Alkali Decomposition Gas Generation Method: Method of reacting at room temperature a 28.5 mass% caustic potash ethanol / water mixed solution with a solution where a sample is dissolved in toluene or IPA, collecting the generated hydrogen gas in a collection tube, and then measuring the volume thereof

The method for manufacturing the present composition preferably does not include a stripping step after the step of synthesizing the polyether-polysiloxane block copolymer (A') by a hydrosilylation reaction. This is to avoid a foaming phenomenon during the process in the manufacturing step after the synthesis of component (A'). Note that the composition containing the aforementioned component (A') and component (B') as main components preferably has a viscosity at 25°C that is within a range of 100 to 60,000 mm²/s, from the perspective of convenience during use, handling, and the like.

### [Step 4: Filtration process]

The method for manufacturing the present composition preferably also includes a step of optionally filtering the obtained composition after hydrosilylation reaction. Herein, means such as a filter and a filter medium used for filtration can be appropriately selected depending on the production scale and the kind or degree of foreign matter, but from the viewpoint of reducing waste, ensuring the safety of workers, working efficiency, and ensuring the quality and performance of the present composition in use as a foam stabilizer, it is preferable to use a zeta potential adsorption filter, a bag filter, a cartridge filter, or the like. Note that Step 4 may be performed at any timing before or after the addition of component (C) described below, and may be performed two or more times depending on the desired light transmittance and the like.

The filtration step is not particularly limited, but the composition after the hydrosilylation reaction can be filtered so that the light transmittance (at 580 nm) is 90% or more, more preferably 95% or more.

### [Addition of component (C)]

In the method for manufacturing the present composition, the following component (C) may be added to the composition containing the component (A') and the component (B') as main components so that the amount of the component (A') is 1 % by mass or more, followed by mixing and homogenizing.

Component (C) is a polyether compound that is compatible with component (A'), component (B'), and component (N1) and the like after synthesis and is selected from the following components (C1) to (C3). By mixing and homogenizing the entire composition, the viscosity of the composition of the present invention can be adjusted without adversely affecting the function of the composition as a foam stabilizer or surfactant, thereby improving convenience in use and handling. Furthermore, component (C) can be and is preferably used in order to adjust the hydroxyl value in a polyurethane foam-forming composition containing the present composition, or in other words, in order to control crosslinking density, strength, and other various physical properties of the polyurethane foam. Note that the timing at which the component (C) is added to the system can be arbitrarily selected.

### (C1) is a polyethermonool expressed by the following general formula (4):

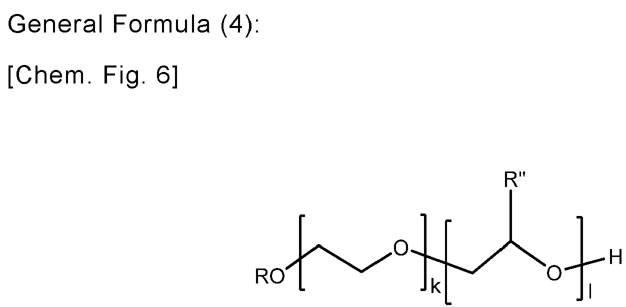

(where R represents a monovalent hydrocarbon group having 1 to 9 carbon atoms and having no aliphatic unsaturated bonds, R" represents a methyl group or an ethyl group, k satisfies the conditions of 0 ≦ k ≦ 20, l satisfies the conditions of 4 ≦ l ≦ 50, and the amount of the oxyethylene moiety in the polyether moiety is 60 wt.% or less).

A preferred example of component (C1) is polypropylene glycol n-butyl ether where k = 0, R = n-C₄H₉, R" = CH₃, which has the advantages of easy handling and inexpensive availability. In particular, those in the range of 4 ≦ l ≦33 have excellent compatibility with the above-mentioned composition and are preferred. Furthermore, when a low VOC is desired, or the concentration of hydroxyl groups derived from (C1) is to be reduced, a range of 10 ≦ l ≦ 33 is preferable.

### (C2) Polyether diol expressed by general formula (5) below.

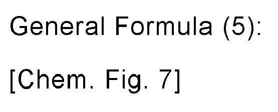

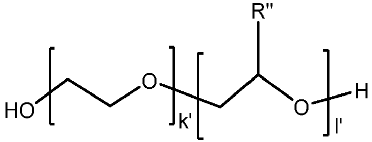

(where R" has the same meaning as defined above, k' satisfies the conditions 0 ≦ k' ≦ 10, l' satisfies the conditions 4 ≦ l' ≦ 70, and the amount of oxyethylene moiety in the polyether moiety is 30 wt.% or less)

Preferred examples of component (C2) include polypropylene glycol where k' = 0 and R" = CH₃, which has the advantages of easy handling and inexpensive availability. In particular, those where 4 ≦ l' ≦ 34 will have excellent compatibility with the above-mentioned composition and are preferred.

(C3) a polyethertriol containing 20 wt.% or less of an oxyethylene moiety and an average molecular weight in a range of 500 to 4500 and obtained by addition polymerization of an alkylene oxide having 2 to 4 carbon atoms to glycerin and/or trimethylolpropane.

Preferable specific examples of component (C3) include polyethertriols obtained by addition polymerization of propylene oxide to glycerin, and those having an average molecular weight of approximately 1500 to approximately 3500 are preferable because handling is easy and compatibility with the composition is particularly excellent.

Component (C) may be included within a range in which the amount of the component (A') is 1% by mass or more with respect to the composition.

At this time, the timing of adding Component (C) is preferably after the hydrosilylation reaction, and at this time, the viscosity at 25°C of the entire composition is preferably within a range of 100 to 35,000 mm²/s, and the amounts of component (C), component (A'), and component (B') can be adjusted in order to satisfy the aforementioned viscosity range, or based on the physical properties of the required polyurethane foam. Note that as described above, the technical intention of adding component (C) is not limited to adjusting the viscosity and the like.

A composition containing Component (A') and Component (B') at a mass ratio within the range of 20/80 to 60/40, and further containing the sodium carboxylate in an amount of 3.8 to 43 wt.% calculated as sodium to the actual amount of component (B') that was used, and further containing Component (C) is useful as a foam stabilizer or surfactant, especially as a foam stabilizer for polyurethane foam or premix solutions for polyurethane foam.

In particular, a composition where:
component (A') after synthesis further satisfies the structural characteristics of component (A");
the mass ratio of component (A") and component (B') is in a range of 20/80 to 60/40;
the sodium salt of a monovalent carboxylic acid having 2 to 18 carbon atoms is included in a range of 0.6 to 6.7 wt.% calculated as sodium to the total amount of component (A") and component (B'); and
the amount of Component (C) is in a range of 1 to 20% by mass of component (A"),
are particularly useful in the above applications, and are expected to have not only manufacturing advantages, but also specific technical effects such as a foam-enhancing effect as a composition.

### [Other Optional Components]

The composition obtained by the manufacturing method of the present invention is preferably used mainly as a surfactant or the like, and may contain other organic modified silicones such as polyether-modified silicones, straight silicones, organic surfactants, and the like as long as the technical features thereof are not impaired. In this case, the amount of these components is preferably in a range that does not exceed the mass of component (A') in the entire present composition. Note that such a composition can also be suitably used as a surfactant or the like, particularly as a foam stabilizer for polyurethane foam.

At least a portion of the components usable in the polyurethane foam-forming composition described below may be added beforehand as other optional components to the present composition, and mixed and homogenized, within a range that does not impair the technical effects of the present invention.

In the method for manufacturing the present composition, the other optional components described above, Component (B') and Component (C) may be added, mixed, and homogenized. Furthermore, in the method of manufacturing the present composition, at least a portion of the components usable in the polyurethane foam-forming composition described below may be added as other optional components to the present composition, and mixed and homogenized, within a range that does not impair the technical effects of the present invention. This is advantageous in that a homogeneous premix liquid for polyurethane foam containing a foam stabilizer component and other desired components can be prepared.

Although an organic solvent may be used in the present composition, the use and contamination of an aromatic hydrocarbon solvent such as a BTX (benzene, toluene, xylene) solvent can be avoided in the production method of the present invention, so it is possible to meet the current needs of the polyurethane industry which require strict VOC / emission control and prohibit the use of BTX and the like.

### [Advantages provided by the production method]

The method for manufacturing the present composition is an efficient production process capable of utilizing inexpensive raw materials having varying qualities, and even if a copolymer having a desired high molecular weight or strong foam stability is designed, the problem of foam control occurring in the production process will not occur, or can be easily solved, and thus the method has excellent productivity and can comprehensively solve the problems of manufacturing directly linked to the industrial production cost and problems with quality. Therefore, by using the polyether-polysiloxane block copolymer composition obtained by the present manufacturing method, it is expected that a foam stabilizer containing the composition can be sufficiently and stably promoted in the market and can be utilized as a high-performance raw material.

As described above, the polyether-polysiloxane block copolymer composition of the present invention (including the composition obtained by the above-described manufacturing method) is particularly useful as a foam stabilizer for use in the production of polyurethane foam, and can be directly used as a surfactant or a foam stabilizer for polyurethane foam. Alternatively, the composition may be blended in a premix liquid for urethane foam and used as a system.

### [Use of the Present Composition]

The polyether-polysiloxane block copolymer composition of the present invention has a polyether site and a silicone site with mutually different hydrophilicity in a molecule, and therefore can be used without particular limitation in conventionally known applications of a polyether-polysiloxane block copolymer, and can be used without particular limitation in surfactants, foam stabilizers, fiber lubricity imparting agents or softening agents, surface treating or coating agents, reactive raw materials of other polymeric materials, and the like. In particular, the polyether-polysiloxane block copolymer composition of the present invention is useful as an industrial surfactant, where the formulation destination is paint, coating agents, construction materials, hydrophilicity imparting agents, surface treating agents, foamable resin compositions, and the like, and is not particularly limited. Furthermore, based on a function as a surfactant, the composition is particularly useful as a paint additive, emulsifier, solubilizer, or foam stabilizer for polyurethane foam.

A particularly preferred application of the present composition is a surfactant, a foam stabilizer for polyurethane foam, or a premix liquid for polyurethane foam, and the use as a foam stabilizer will be described in more detail below. Note that in the present specification, polyurethane foam may be referred to as "polyurethane foam" or "foam".

### [Use as Foam stabilizer]

As described above, the polyether-polysiloxane block copolymer composition of the present invention is relatively easy to produce, is less susceptible to quality effects derived from raw materials, and has excellent cost-in-use characteristics, and thus is suitable for use as a surfactant for foam control or foam stabilization, especially as a foam stabilizer in the production of foaming resins, especially polyurethane foam.

In particular, when used as a foam stabilizer for polyurethane foam or as a premix solution for polyurethane foam, the present composition is not only a foam stabilizer, but also has the advantages of easy control and design of open cell ratio, excellent homogeneity and stability of the premix solution, excellent compatibility with various components in emulsion compositions for foam formation, and also has the advantages of excellent compatibility with various components and excellent foam-forming properties for microcellular applications and low repellent foam applications.

### [Composition containing a suitable component (A"), component (B'), and component (N) and having a foam-enhancing effect]

In general formula (3), a composition containing component (A") satisfying the structural features described above, component (B') described above, and (N) a monovalent sodium carboxylate having 2 to 18 carbon atoms, where the mass ratio of component (A"): component (B') is in a range of 20:80 to 60:40, and the amount of sodium cation (Na⁺) in component (N) is in a range of 0.6 to 6.7 wt. ppm provides significantly improved foam enhancing properties to the composition and a foam stabilizer containing the composition, as compared to the case where components (A") and (B') are used in a specific mass ratio.

On the other hand, the amount of the component (N) to be used has a critical meaning, and if it is out of the above-mentioned range, the technical effects such as foam-enhancing properties may not be sufficiently achieved. Specifically, component (N), which is a sodium salt, must be used in combination with components (A") and (B'), which have suitable structural features, in order to achieve foam enhancing properties, and if the amount used is below the lower limit, the foam enhancing properties may be insufficient, but if the amount used exceeds the upper limit mentioned above, the components will tend to precipitate in the system beyond the limit of the compatibility balance of the blended system, and sufficient foam enhancement may not be achieved.

The method of obtaining a composition having the foam enhancing effect of the present invention may be and is preferably the same manufacturing method as described above, as long as the amount of component (N) used is limited to the above range, and raw material component (a1) and component (a2) are used so as to provide component (A"). For example, when component (N) is added, it may be dispersed in one or more liquid compounds (for example, propylene glycol or the like) selected from solvent (S3) saturated diol compounds containing 3 to 9 carbon atoms instead of component (S) in the above-mentioned Step 1, and added to the production raw material system. In this case, the step of removing component (S) in step 2 may be omitted, and the remaining raw material components may and preferably are added to the hydrosilylation reaction with the solvent (S3) remaining. In other words, the method of obtaining the composition having the foam-enhancing effect described above may be a method that does not require steps 1 to 3 above, and the composition having the foam-enhancing effect of the present invention need not be specified by the manufacturing method.

### [Polyurethane foam forming composition and polyurethane foam containing this composition]

Therefore, so long as the polyurethane foam-forming composition of the present invention contains the polyether-polysiloxane block copolymer composition of the present invention which is the aforementioned foam stabilizer, the type, properties, and type of applied formulation are not particularly limited.

In general, polyurethane foam includes hard polyurethane foam and soft polyurethane foam, which are specifically classified into soft urethane foam, high resilience urethane foam, hard urethane foam, and special foam. For the details thereof, for example, refer to Patent Document 6 (WO 2016/166979). The compositions and foam stabilizers of the present invention are versatile and can be formulated into these various polyurethane foam formulations benefits when incorporated into these various polyurethane foam formulations.

In addition, as described above, the composition and the foam stabilizer according to the present invention can be easily made to be free of a BTX solvent and can be produced inexpensively and in a large amount, and thus are suitable for obtaining a low VOC / emission type polyurethane foam. Furthermore, the foam stabilizer facilitates manufacture of BTX-free foams, premix systems, and the like by foam manufacturers and foam formulation (system) designers. Note that in order to manufacture a polyurethane foam having less VOC / emission and less odor, it is preferable to add a non-volatile antioxidant to the polyol described below.

The polyether-polysiloxane block copolymer composition obtained by the manufacturing method of the present invention suitably uses as one raw material: (d) a foam stabilizer in a polyurethane foam-forming composition containing the following components:
A polyurethane foam-forming composition, comprising:
(a) a polyol;
(b) a polyisocyanate;
(c) a catalyst;
(d) the foam stabilizer; and
(e) optionally, at least one added component selected from a group consisting of foam stabilizers other than component (d), foaming agents, diluents, chain extenders, crosslinking agents, water, nonaqueous foaming agents, fillers, reinforcing agents, pigments, dyes, coloring agents, flame retardants, antioxidants, anti-ozone agents, UV stabilizers, anti-static agents, disinfectants, and antibacterial agents.

With respect to the raw material components of the polyurethane foam-forming composition other than the foam stabilizer (d) and the amounts used, raw materials known in the art can be selected and used, and for example, each component described in Patent Document 6 (International Patent Application Publication 2016/166979) can be considered.

Note that the foam stabilizer of the present invention can be used as a foam stabilizer suitable for most polyurethane foams. The added amount thereof is within a range where the polyether-polysiloxane block copolymer (A') in the composition is 0.1 to 10 parts by mass, preferably within a range of 0.5 to 5 parts by mass, and more preferably 1.0 to 3.0 parts by mass, with regard to (a) 100 parts by mass of polyol.

The polyurethane foam obtained by using the "composition the polyether-polysiloxane block copolymer (A')" according to the present invention may be a rigid foam, a semi-rigid foam, a flexible foam, a low-resilience foam, an HR foam, or a microcellular foam. Reference can be made to, for example, Patent Document 6 (International Patent Application Publication 2016/166979) for the details and the production process thereof, and these polyurethane foams can be obtained by replacing at least a portion or all of the foam stabilizers described in Patent Document 6 with the foam stabilizer of the composition according to the present invention. It is also possible to add the technique obtained in the present invention [for example, adding an appropriate amount of the component (N) of the present invention before reaction and then reacting] to the foam stabilizer or polyether-polysiloxane block copolymer composition production method described in Patent Document 3 (Japanese Unexamined Patent Application H08-156143) and the Examples and Comparative Examples of International Patent Application Publication 2021/131378 in order to enhance the foam performance and adjust the cell size in various polyurethane foams.

Furthermore, a method of manufacturing an individual polyurethane foam can be appropriately selected, but in particular, the "composition containing a polyether-polysiloxane block copolymer (A')" obtained by the manufacturing method of the present invention can be suitably used in place of the silicone-based foam stabilizer, silicone surfactant, or silicone copolymer surfactant in the manufacturing method of a polyurethane foam described in the following patent publications or detailed description of the patent publications, and particularly the examples and the like, and can contribute to reducing the VOC and emissions of the foam. Note that the disclosure of the detailed descriptions thereof or examples include disclosures related to a manufacturing device, and a portion of components may be further substituted, and manufacturing conditions thereof may be appropriately modified based on changing viscosity or the like, by normal design modifications of a person with ordinary skill in the art.
- US Patent No. 7825205 (Patent No. 5422115)
- Japanese Unexamined Patent Application Publication 2014-210832
- Japanese Unexamined Patent Application Publication H07-090102
- Patent Document 3 (Japanese Unexamined Patent Application H08-156143 (Japanese Examined Patent Application Publication S57-014797)
- Patent Document 6 (International Patent Application Publication 2016/166979)
- Manufacturing methods of polyurethane foam described in Japanese PCT Patent Application 2005-534770, Japanese PCT Patent Application 2005-534770, and Japanese PCT Patent Application 2010-535931;
- Manufacturing process of open cell polyurethane described in Japanese PCT Patent Application 2010-539280;
- Sealing material containing urethane foam described in JP 2012-246397A, JP 2009-265425A, and the like;
- Manufacturing of urethane foam described in JP 2012-082273A, JP2010-247532A, JP2010-195870A, JP2002-137234A, and the like
- Manufacturing of polyurethane foam described in Japanese PCT application 2010-500447, Japanese PCT application 2010-504391, Japanese PCT application 2010-538126, Japanese PCT application 2011-528726, and Japanese PCT application 2013-529702

Furthermore, the polyol-polysiloxane block copolymer composition obtained by the manufacturing method of the present invention can optionally be used in known industrial applications for (AB)n type polyether-modified silicones other than polyurethane foams, for example, as a fiber treatment agent, a fabric softener, a paint additive, and the like.

### [Disclosure and teaching of converting the technical elements of the present invention to other hydrosilylation reaction processes]

In view of their functions, the sodium salt solution of the present invention and the carboxylates and the like used in the comparative examples and the like described below are expected to provide the same favorable process effects in similar hydrosilylation reaction processes. Therefore, with reference to the hydrosilylation reaction processes of the present invention, general-purpose non-hydrolyzable polyether-modified silicone, which is composed mainly of a structure in which polyether side chains and/or end chains are grafted onto an organopolysiloxane main chain, the sodium salt solution of the present invention, and other buffers and the like examined in the comparative examples, can be applied to these hydrosilylation reaction processes to improve the production efficiency and production costs, and the like. Furthermore, when manufacturing these non-hydrolyzable polyether modified silicones, an appropriate amount of buffer agent can be mixed into the raw material system in the same manner as the sodium salt solution of the present invention before the start of the hydrosilylation reaction, and then the solvent of the buffer agent is removed by stripping, or the like before the hydrosilylation reaction is started. The description of the present specification is intended to provide such teachings and suggestions.

### EXAMPLES

Hereinafter, the present invention will be further described in detail based on Examples and Comparative Examples, but the present invention is not limited thereto. Note that in the following composition formulas, a Me₃SiO group (or Me₃Si group) is expressed as "M", a Me₂SiO group is expressed as "D", a MeHSiO group is expressed as "M^{H}", and units where a methyl group in M and D is modified by any substitution group is expressed as M^{R} and D^{R}. IPA represents isopropanol, MeOH represents methanol, BDPG represents dipropylene glycol monobutyl ether, EO represents ethylene oxide or oxyethylene group, and PO represents propylene oxide or oxypropylene group.

### <Reference Data 1>

One of the features of the composition and the production method of the present invention is that the influence of the quality of the raw materials used is alleviated and practically sufficient performance is achieved. The difference in quality depending on the supplier of BDPG is as shown in Table 1, and the BDPG of Company H and Company L are different in purity, water content, acid value and the like.

[Table 1]: Difference in quality according to supplier of BDPG

**[Table 1]**

| Inspection Items | Company H (high price) | Company L (low price) |
|---|---|---|
| Purity [wt%] | 99.8 | 99.1 |
| Moisture [wt%] | 0.02 | 0.01 |
| Hue (APHA) | 10 | 3 |
| Acid value [wt%] | 0.0010 | <0.01 |
| Specific gravity (25/25°C) | 0.914 | 0.90 to 0.92 |
| Distillation range (760 mmHg) Or boiling point [°C] | 231 | 222-232 |

In the aforementioned tests, the raw material straight chain organopolysiloxane-polyether block copolymers were:
(a1-1) bismethallylpolyether expressed by the average compositional formula CH₂=C(CH₃)CH₂-O(C₂H₄O)₃₅(C₃H₆O)₂₇-CH₂-C(CH₃)=CH₂ (degree of unsaturation 0.67 meq/g, hydroxyl value 0.8 mg - KOH/g)
(a1-2) bismethallylpolyether expressed by the average compositional formula CH₂=C(CH₃)CH₂-O(C₂H₄O)₃₅(C₃H₆O)₂₇-CH₂-C(CH₃)=CH₂ (degree of unsaturation 0.64 meq/g, hydroxyl value 2.1mg - KOH/g)
(a1-3) bismethallylpolyether expressed by the average compositional formula CH₂=C(CH₃)CH₂-O(C₂H₄O)₃₅(C₃H₆O)₂₇-CH₂-C(CH₃)=CH₂ (degree of unsaturation 0.60 meq/g, hydroxyl value 3.8 mg - KOH/g)
(a1-4) bismethallylpolyether expressed by the average compositional formula CH₂=C(CH₃)CH₂-O(C₂H₄O)₃₅(C₃H₆O)₂₇-CH₂-C(CH₃)=CH₂ (degree of unsaturation 0. 63 meq/g, hydroxyl value 0.7mg - KOH/g)
(a1-4) bismethallylpolyether expressed by the average compositional formula CH₂=C(CH₃)CH₂-O(C₂H₄O)₃₅(C₃H₆O)₂₇-CH₂-C(CH₃)=CH₂ (degree of unsaturation 0. 63 meq/g, hydroxyl value 0.7mg - KOH/g)
* Remarks: (a1-1) to (a1-5) correspond to lot different raw materials of bismethallyl polyethers.
(a2-1) a methylhydrogenpolysiloxane represented by the average compositional formula M^{H}D₂₀M^{H}
Pt catalyst (hydrosilylation reaction catalyst): 1,3-divinyl-1,1,3,3-tetramethyldisiloxane platinum complex was used (PT concentration 0.43 wt%)

When the above-mentioned BDPG manufactured by Company H or Company L was used as component (B'), the BDPG is referred to as "(B') BDPG (Company H)" or "(B') BDPG (Company L)".

### [Light transmittance (T%) in each test case]

In the following Test Examples, the transmissivity (T%) of each composition obtained was determined by measuring the light transmittance at 580 nm wavelengths using a spectrophotometer. The results are shown in the table as T%.

### [Example 1]

A 500 mL reaction vessel was charged with 104.19 g of (a1-3) bismethallylpolyether (containing 500 ppm of natural vitamin E) and 0.15 g of 5 wt.% sodium acetate (N) in MeOH (S), and heating was applied to 60°C while stirring under nitrogen gas flow. After the entire mixture was uniformly mixed, the MeOH was removed from the system by stripping for 30 minutes at a temperature of 60 to 80°C and pressure of 2 mmHg in the same reaction vessel. The pressure was restored, 38.81 g of (a1-1) methylhydrogenpolysiloxane and 125 g of (B') BDPG (L company) were added under stirring, 0.06 mL of hydrosilation catalyst was also added, and the reaction was carried out at 60 to 90°C for 6 hours, and as a result, the reaction was substantially complete. Thereby, an essentially transparent liquid polyether-polysiloxane block copolymer composition "1619 mm²/s, (25°C)" including the straight chain organopolysiloxane-polyether block copolymer at least containing a structural unit expressed by the average composition formula: 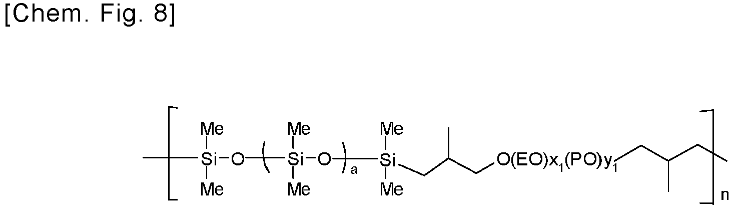
(where a = 20, x1 = 35, y1 = 27, and n ≒ 6) and
BDPG was obtained at a 50:50 ratio.

Note that the average composition formula is simply expressed, but the molar ratio of C=C groups and Si-H groups of raw material C=C/SiH was approximately 1.10, and therefore, both terminals of the copolymer have a form blocked by a polyether (= terminal functional group is a methallyl group or hydroxyl group bonded to a polyether). Furthermore, a portion of the Si-H groups in the reaction can cause a dehydrogenative condensation reaction with a hydroxyl group of the IPA or BDPG; therefore, a portion of the copolymer terminal is considered to include a structure of SiO-iPr or SiO-R¹ (R¹ represents a BDPG residual group). Note that herein, a polyether portion is a random adduct of ethylene oxide and propylene oxide. This is also true for Comparative Examples 1-1 through 1-3.

### [Comparative Example 1-1]

The polyether-polysiloxane block copolymer composition in a translucent to almost transparent liquid state "1581 mm²/s, (25°C)" was obtained in the same manner as in Example 1, except that the MeOH was not removed by stripping and 0.08 mL of hydrosilylation reaction catalyst was added, and the reaction was conducted at 60 to 90°C for 6 hours.

### [Comparative Example 1-2]

(a2-1) Methylhydrogenpolysiloxane 45.81 g, (a1-3) Bismethallylpolyether 104.19 g (containing 500 ppm of natural vitamin E), and (B') BDPG (L company) 150 g were placed in a 500 mL reaction vessel, and heated to 60°C with stirring under a stream of nitrogen. 0.04 mL of hydrosilation catalyst was added, and the reaction was carried out at 60 to 80°C for 3 hours. A small amount of the reaction liquid was collected, and the reaction was confirmed to be almost completed using an alkali decomposition gas generation method. Thereby, an opaque liquid polyether-polysiloxane block copolymer composition "931 mm²/s, (25°C)" including the straight chain organopolysiloxane-polyether block copolymer at least containing a structural unit expressed by the average composition formula: 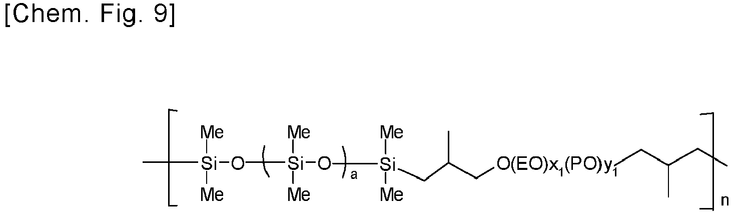
(where a = 20, x1 = 35, y1 = 27, and n < 6) and
BDPG was obtained at a 50:50 ratio.

### [Comparative Example 1-3]

A translucent liquid polyether-polysiloxane block copolymer composition containing a 50:50 ratio of BDPG and a linear organopolysiloxane-polysiloxane block copolymer containing at least structural units expressed by the average composition formula 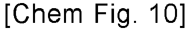 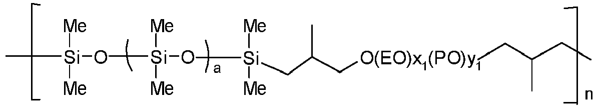
(where a = 20, x1 = 35, y1 = 27, n ≒ 6)
was obtained "1528 mm²/s, (25°C)" similar to Comparative Example 1-2, except that,
as a raw material component, 0.009 g of sodium acetate solid was injected, and after heating to 56°C with stirring under nitrogen gas distribution, 0.08 mL of hydrosilylation reaction catalyst was added, and the reaction was carried out for 6 hours at 60 to 80°C.

### [Example 2: Test to confirm reproducibility using different lots of the bismethalyl polyether of Example 1]

A 500 mL reaction vessel was charged with 86.19 g of (a1-1) bismethallylpolyether (containing 500 ppm of natural vitamin E) and 0.12 g of 5 wt.% sodium acetate (N) in MeOH (S), and heating was applied to 60°C while stirring under nitrogen gas flow. After the entire mixture was uniformly mixed, the MeOH was removed from the system by stripping for 40 minutes at a temperature of 60 to 80°C and pressure of 3 mmHg in the same reaction vessel. The pressure was restored, (a2-1) methylhydrogenpolysiloxane 38.81 g and (B') BDPG (L company) 125 g were added under stirring, and 0.06 mL of hydrosilation catalysts were further added, and the reaction was carried out at 60 to 90°C for 6 hours, with the result that the reaction was substantially complete. Thereby, an essentially transparent liquid polyether-polysiloxane block copolymer composition "1714 mm²/s, (25°C)" including the straight chain organopolysiloxane-polyether block copolymer at least containing a structural unit expressed by the average composition formula: 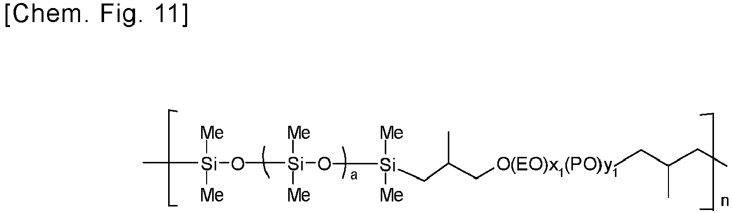
(where a = 20, x1 = 35, y1 = 27, and n ≒ 6) and
BDPG was obtained at a 50:50 ratio.

Note that the average composition formula is simply expressed, but the molar ratio of C=C groups and Si-H groups of raw material C=C/SiH was approximately 1.20; therefore, both terminals of the copolymer have a form blocked by a polyether (= terminal functional group is a methallyl group or hydroxyl group bonded to a polyether). Furthermore, a portion of the Si-H groups in the reaction can cause a dehydrogenative condensation reaction with a hydroxyl group of the BDPG; therefore, a portion of the copolymer terminal is considered to include a structure of SiO-iPr or SiO-R¹ (R¹ represents a BDPG residual group). Note that herein, a polyether portion is a random adduct of ethylene oxide and propylene oxide. This is also the case in Comparative Examples 3 and 4-1.

### [Example 3: Reproducibility confirmation test of Example 2]

A 500 mL reaction vessel was charged with 86.70 g of (a1-4) bismethallylpolyether (containing 500 ppm of natural vitamin E) and 0.12 to 0.13 g of 5 wt.% sodium acetate (N) in MeOH (S), and heating was applied to 60°C while stirring under nitrogen gas flow. After the entire mixture was uniformly mixed, the MeOH was removed from the system by stripping for 30 minutes at a temperature of 60 to 80°C and pressure of 7 to 8 mmHg in the same reaction vessel. After the pressure was restored, (a2-1) methylhydrogenpolysiloxane 38.31 g and (B') BDPG (L company) 125 g were added under stirring, and 0.06mL of hydrosilation catalysts were further added, and the mixture was reacted at 70 to 80°C for 3 hours. Thereby, an essentially transparent liquid polyether-polysiloxane block copolymer composition "1634 mm2/s, (25°C)" including the straight chain organopolysiloxane-polyether block copolymer at least containing a structural unit expressed by the average composition formula: 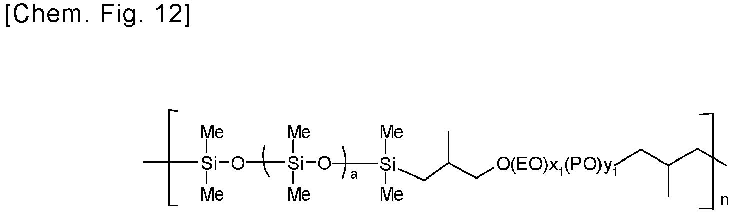
(where a = 20, x1 = 35, y1 = 27, and n ≒ 6) and
BDPG was obtained at a 50:50 ratio.

Note that the average composition formula is simply expressed, but the molar ratio of C=C groups and Si-H groups of raw material C=C/SiH was approximately 1.15; therefore, both terminals of the copolymer have a form blocked by a polyether (= terminal functional group is a methallyl group or hydroxyl group bonded to a polyether). Furthermore, a portion of the Si-H groups in the reaction can cause a dehydrogenative condensation reaction with a hydroxyl group of the BDPG; therefore, a portion of the copolymer terminal is considered to include a structure of SiO-iPr or SiO-R¹ (R¹ represents a BDPG residual group). Note that herein, a polyether portion is a random adduct of ethylene oxide and propylene oxide.

### [Comparative Example 2]

(a2-1) Methylhydrogenpolysiloxane 75.25 g, (a1-2) bismethallylpolyether 174.75 g, (B') BDPG (H company) 250 g, and natural Vitamin E 0.25 g were introduced in a 1 L reaction vessel, and heated to 80 to 90°C with stirring under a stream of nitrogen gas. 0.56 mL of hydrosilation catalyst was added, and the reaction was carried out for 2.5 hours. Next, a small amount of reaction liquid was collected, and when confirmed by an alkali decomposition gas generation method (the remaining Si-H groups are decomposed using a KOH ethanol/water solution, and the reaction rate is calculated from the volume of the produced hydrogen gas), the reaction was found to be completed. Thereby, an essentially transparent liquid polyether-polysiloxane block copolymer composition "1680 mm2/s, (25°C)" including the straight chain organopolysiloxane-polyether block copolymer at least containing a structural unit expressed by the average composition formula: 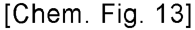 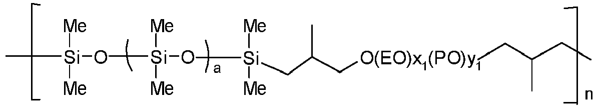
(where a = 20, x1 = 35, y1 = 27, and n ≒ 6) and
BDPG was obtained at a 50:50 ratio.

Note that the average composition formula is simply expressed, but the molar ratio of C=C groups and Si-H groups of raw materials C=C/SiH = 1.18, and therefore both terminals of the copolymer have a form blocked by a polyether (= terminal functional group is a methallyl group or a hydroxyl group bonded to a polyether). Furthermore, a portion of the Si-H groups in the reaction can cause a dehydrogenative condensation reaction with a hydroxyl group of the BDPG, IPA, and the like; therefore, a portion of the copolymer terminal is considered to include a structure of SiO-iPr or SiO-R¹ (R¹ represents a BDPG residual group). Note that herein, a polyether portion is a random adduct of ethylene oxide and propylene oxide.

### [Comparative Example 3: Reproducibility Confirmation Test of Comparative Example 1-1]

(a2-1) methylhydrogenpolysiloxane 38.81g, (a1-1) bismethallylpolyether 86.19g (containing 500 ppm of natural vitamin E), (B') BDPG (L company) 125 g, and (N + S) an MeOH (S) solution of 5 wt.% sodium acetate 0.12 to 0.13 g were introduced into a 500 mL reaction vessel, and heated to 46°C while stirring under nitrogen gas flow. 0.06 mL of hydrosilation catalyst was added, and the reaction was carried out at 60 to 80°C for 4 hours. A small amount of the reaction liquid was collected, and the reaction was confirmed to be almost completed using an alkali decomposition gas generation method. Thereby, a translucent to essentially transparent liquid polyether-polysiloxane block copolymer composition "1533 mm2/s, (25°C)" including the straight chain organopolysiloxane-polyether block copolymer at least containing a structural unit expressed by the average composition formula: 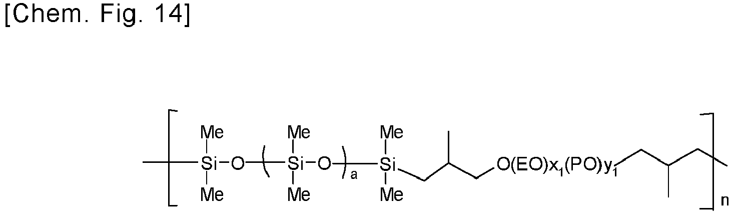
(where a = 20, x1 = 35, y1 = 27, and n ≒ 6) and
BDPG was obtained at a 50:50 ratio.

### [Comparative Example 4-1: Reproducibility Confirmation Test of Comparative Example 3]

(a2-1) methylhydrogenpolysiloxane 38.30 g, (a1-4) bismethallylpolyether 86.70g (containing 500 ppm of natural vitamin E), (B') BDPG (L company) 125 g, and (N + S) an MeOH (S) solution of 5 wt.% sodium acetate 0.12 to 0.13 g were introduced into a 500 mL reaction vessel, and heated to 51 °C while stirring under nitrogen gas flow. 0. 06 mL of the hydrosilation catalyst was added, and the reaction was carried out at 50 to 80°C for 3.5 hours. As a result, the reaction was confirmed to be completed. A translucent to essentially transparent liquid polyether-polysiloxane block copolymer composition "1383 mm²/s, (25°C)" was obtained.

### [Comparative Example 4-2]

(a2-1) Methylhydrogenpolysiloxane 43.56 g, (a1-4) Bismethallylpolyether 81.45 g (containing 500 ppm of natural vitamin E), and (B') BDPG (L company) 125 g were placed in a 500 mL reaction vessel, and heated to 45°C with stirring under a stream of nitrogen gas. 0. 06 mL of the hydrosilation catalyst was added, and the reaction was carried out at 45 to 80°C for 4.5 hours. As a result, the reaction was almost completed. Thereby, an essentially transparent liquid polyether-polysiloxane block copolymer composition "7300 cP, (25°C)" including the straight chain organopolysiloxane-polyether block copolymer at least containing a structural unit expressed by the average composition formula: 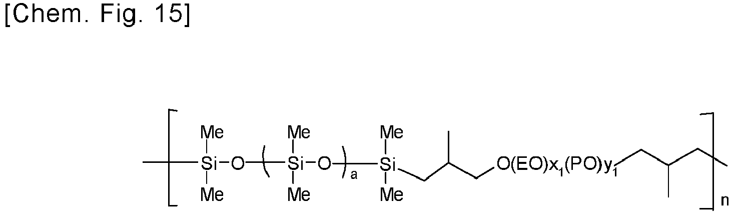
(where a = 20, x1 = 35, y1 = 27, and n > 6) and
BDPG was obtained at a 50:50 ratio.

### [Evaluation criteria for each test]

The hydrosilylation reaction process to provide a linear organopolysiloxane-polyether block copolymer was evaluated as follows, taking into account differences in raw materials and reaction systems.

The hydrosilylation reactivity (hereinafter simply referred to as "reactivity") was evaluated based on Example 1 being "acceptable", where
"Good" indicates more favorable reactivity, and
"Excellent" indicates particularly excellent reactivity.

The viscosity (rate of change) of the obtained compositions is shown in the table by % of increase or decrease in the value of the viscosity in each test example, where examples (1 to 3) using the same bismethalyl polyether was "0%" (= baseline). However, Comparative Example 2 was not included in the evaluation for the rate of viscosity change because the BDPG source was different.

### [Summary]

The results of a series of tests are shown in Table 2. Except for Comparative Example 2, which used a different BDPG source and Comparative Example 4-2 which used a different C=C/Vi ratio, the same lot of bismethalyl polyether raw material and the same C=C/Vi ratio were used for easy comparison, and the examples/comparative examples are summarized in the table.

First, Examples 1-3 used BDPG made by Company L, which is relatively inexpensive and has a slightly higher acid value as the raw material. Polyether-polysiloxane block copolymer compositions could be produced from all of the lots of bismethalyl polyether raw material, and the reactivity, viscosity, and transparency (or in other words, light transmittance T%) were essentially comparable when compared to Comparative Example 2, a comparative standard product made from expensive BDPG made by Company H. In other words, it was found that by using the manufacturing method of the present invention, side reactions were effectively suppressed, and compositions with sufficiently high viscosity for practical use, higher degree of polymerization of the copolymer, closer to the design structure, and of sufficient quality for practical use could be obtained.

On the other hand, Comparative Example 2 does not contain a buffer or sodium acetate, and generally corresponds to the content of Reference Example 1-1 of International Patent Application Publication 2016/166979 (Patent Document 6). By using BDPG manufactured by Company H, which has a low acid value, high purity, and is expensive, it was possible to obtain a composition having practical viscosity and appearance including the molecular weight of the copolymer, but the BDPG produced by Company H is expensive, so this composition is difficult to supply to the market stably at low cost.

On the other hand, when the same bismethalyl polyether raw material was used and the C=C/Vi ratio was the same in the Examples/Comparative Examples, the compositions in the Examples obtained by the manufacturing method of the present invention had higher viscosity, suppressed side reactions, and excellent transparency, as compared to the Comparative Examples. These effects are thought to be due to the efficient neutralization of the acidic substances because the buffer components are finely dispersed in the raw material and unwanted dispersants were removed in advance.

In contrast, Comparative Examples 1-1, 2-1, 3-1, and the like, in which no stripping was performed, all exhibited viscosity and transparency that were not as favorable as those of the compositions in the Examples, and Comparative Example 1-2, which lacked a buffer agent, and Comparative Example 1-3, in which a solid was added, had a viscosity and transparency that were even poorer than the comparative tests. Therefore, it was confirmed that the technical effects of the invention, including the suppression of side reactions, could not be achieved if the manufacturing method of the present invention is not used and inexpensive BDPG manufactured by Company L is used. These results were common for the same lot of bismethalyl polyether raw material, and good reproducibility was confirmed.

In Comparative Example 4-2, the true value of the molar ratio of the C=C and Si-H groups of the raw material: C=C/SiH was set to a value close to 1.0 (0.95 by simple calculation based on the analysis results of each raw material), and the objective was to obtain a high molecular weight (high viscosity) composition even under unfavorable conditions without a buffer, using the inexpensive BDPG from Company L.

Although this test example yielded the highest viscosity composition in the series of tests, the viscosity was very high compared to each of the examples and to Comparative Example 2, which is a comparative standard product, strongly suggesting that if the method were used for commercial production, the composition after synthesis would have a large viscosity variation. Furthermore, from the perspective of production control, it is difficult to design C=C/SiH strictly for each production run according to the raw material in this manner, and there is an inherent problem of deteriorating industrial productivity and higher production costs. In addition, the results of Comparative Example 4-2 strongly suggest that even with strict production control, the viscosity of the product may vary greatly due to quality fluctuations caused by different lots of raw materials or storage conditions, measurement errors, and minor changes in manufacturing conditions, and the like, and there is a high possibility that products that fall outside the quality specifications would be produced. Therefore, a manufacturing method that strictly controls the true value of C=C/SiH instead of the manufacturing method of the present invention is inappropriate for achieving the objective of stably supplying this composition to the market at a low price, and in particular, there is a strong concern of a lack of industrial productivity with stable quality standards.

**[Table 2]**

| Test No. | Reactivity | Viscosity (% change) | n | T% | Buffer [ppm] | C=C/ SiH | Buffer name and supplementary information | BDPG | Bismethalyl polyether |
|---|---|---|---|---|---|---|---|---|---|
| Example 1 | Pass | 1619 (± 0) | 6 | 76 | 50 | 1.10 | CH₃COONa (Finely Dispersed State) | Company L | a1-3 |
| Comparative Example 1-1 | Pass | 1581 (-2.3) | 6 | 71 | 50 | Same as above | CH₃COONa (MeOH coexistence) * No stripping | Company L | |
| Comparative Example 1-2 | Good | 931 (- 42.5) | <6 | 40 | 0 | Same as above | Absent | Company L | |
| Comparative Example 1-3 | Pass | 1528 (- 5.6) | 6 | 63 | 60 | Same as above | CH₃COONa (Added as solid) | Company L | |
| Comparative Example 2 | Excellent | 1680 * | 6 | 83 | 0 | 1.18 | Absent | Company H | a1-2 |
| Example 2 | Pass | 1714 (± 0) | 6 | 78 | 50 | 1.20 | CH₃COONa (Finely Dispersed State) | Company L | a1-1 |
| Comparative Example 3 | Good | 1533 (- 10.3) | 6 | 70 | 50 | Same as above | CH₃COONa (MeOH coexistence) * No stripping | Company L | |
| Example 3 | Excellent | 1634 (± 0) | 6 | 76 | 50 | 1.15 | CH₃COONa (Finely Dispersed State) | Company L | a1-4 |
| Comparative Example 4-1 | Excellent | 1383 (-15.4) | <6 | 69 | 50 | Same as above | CH₃COONa (MeOH coexistence) * No stripping | Company L | |
| Comparative Example 4-2 | Good | 7300 (+ 347) ** | >6 | 77 | 0 | 0.95 | Absent | Company L | |

| | | | | | | | | | |
|---|---|---|---|---|---|---|---|---|---|
| *) This indicates a comparative reference product made from BDPG manufactured by Company H, and was not subject to evaluation of the viscosity change rate. **) Compared to the other test cases, the viscosity variation was high, and there are concerns about stable industrial productivity. | | | | | | | | | |

### [Examples 4-1 to 4-3, Example 5, and the like: Effective range of the amount [ppm] of sodium acetate added to BDPG]

In order to confirm the effective range of the amount of sodium acetate added to the BDPG [ppm], compositions containing linear organopolysiloxane-polyether block copolymers were produced by varying the amount of sodium acetate added in the manufacturing process of the present invention, and the relationship between the amount of sodium acetate (ppm) and the viscosity of the resulting compositions is shown in FIG. 1. In these examples, unlike the cases of Examples 1 through 3 above, all of the raw materials except for the hydrosilylation reaction catalyst were first prepared in a flask (reaction vessel), and after mixing, the reaction was started by adding the hydrosilylation reaction catalyst after removing the MeOH by striping. The raw material was BPDG made by Company L, utilizing the bismethallyl polyether of (a1-4) or (a1-2).

### [Standard Products and Target Levels]

Herein, Example 4-1 and Example 5, which provided compositions with good viscosity, are considered the standard products (±0%), and a viscosity reduction rate of -5% from these standard products is considered sufficient for practical use. This is indicated by the solid line in FIG. 1.

### [Example 4-1]

(a2-1) methylhydrogenpolysiloxane 127.12 g, (a1-4) bismethallylpolyether 272.88 g (containing 500 ppm of natural vitamin E), (B') BDPG (Company L) 400 g, and (N + S) 5 wt. % of sodium acetate (N) in an MeOH (S) solution 0.16 g (20 wt. ppm of sodium acetate based on BDPG) were introduced to a 1 L reaction vessel, and heating was started while mixing under a nitrogen gas flow. MeOH was removed out of the system by a stripping operation for 30 minutes under the conditions of 75 to 80°C and 65 to 90 mmHg. The pressure was restored, 0. 21 mL of the hydrosilation catalyst was added, and aging was performed at 80 to 85°C for 3.5 hours, whereupon the reaction was complete. Thereby, a light yellow transparent liquid polyether-polysiloxane block copolymer composition "1862 mm2/s, (25°C)" including the straight chain organopolysiloxane-polyether block copolymer at least containing a structural unit expressed by the average composition formula: 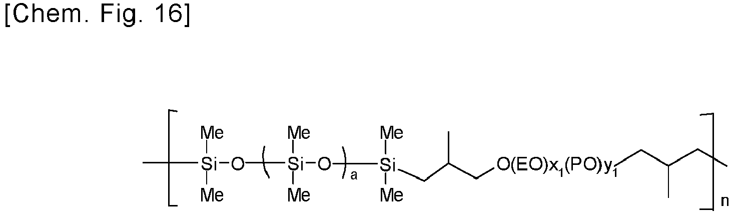
(where a = 20, x1 = 35, y1 = 27, and n ≒ 6) and
BDPG was obtained at a 50:50 ratio.

Note that the average composition formula is simply expressed, but the molar ratio of C=C groups and Si-H groups of raw material C=C/SiH was approximately 1.10; therefore, both terminals of the copolymer have a form blocked by a polyether (= terminal functional group is a methallyl group or hydroxyl group bonded to a polyether). Furthermore, a portion of the Si-H groups in the reaction can cause a dehydrogenative condensation reaction with a hydroxyl group of the BDPG; therefore, a portion of the copolymer terminal is considered to include a structure of SiO-iPr or SiO-R¹ (R¹ represents a BDPG residual group). Note that herein, a polyether portion is a random adduct of ethylene oxide and propylene oxide. This was common to the following Examples 4-2 to 4-3 and Comparative Example 5.

### [Example 4-2]

The test was conducted similar to Example 4-1, except that 0.32 g of a MeOH solution of
5 wt.% sodium acetate (40 wt.ppm of sodium acetate to BDPG) was used instead of 0.16 g of a MeOH solution of 5 wt.% sodium acetate. A light yellow transparent liquid polyether-polysiloxane block copolymer composition "1891 mm2/s, (25°C)" was obtained.

### [Example 4-3]

The test was conducted similar to Example 4-1, except that 0.80 g of a MeOH solution of
5 wt.% sodium acetate (100 wt.ppm of sodium acetate to BDPG) was used instead of 0.16 g of a MeOH solution of 5 wt.% sodium acetate. A light yellow transparent liquid polyether-polysiloxane block copolymer composition "1862 mm2/s, (25°C)" was obtained.

### [Comparative Example 5: No sodium acetate (=0 wt.ppm)]

(a2-1) Methylhydrogenpolysiloxane 124.69 g, (a1-4) Bismethallylpolyether 267.66 g (containing 500 ppm of natural vitamin E), and (B') BDPG (L company) 393 g were placed in a 1 L reaction vessel, and heated to 68°C with stirring under a stream of nitrogen gas. 0. 21 mL of the hydrosilation catalyst was added, and a reaction was carried out at 70 to 85°C for 4 hours. Thereby, n light yellow transparent liquid polyether-polysiloxane block copolymer composition "624 mm2/s, (25°C)" including the straight chain organopolysiloxane-polyether block copolymer at least containing a structural unit expressed by the average composition formula: 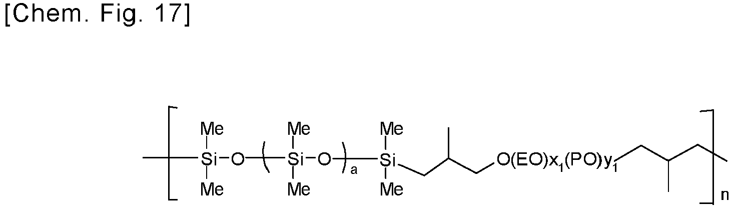
(where a = 20, x1 = 35, y1 = 27, and n < 6) and
BDPG was obtained at a 50:50 ratio.

### [Example 5]

(a2-1) methylhydrogenpolysiloxane 403.92 g, (a1-5) bismethallylpolyether 946.08 g (containing 500 ppm of natural vitamin E), (B') BDPG (Company L) 1350 g, (N + S) 2 wt. % of sodium acetate (N) in an MeOH (S) solution 2.70 g (40 wt. ppm of sodium acetate based on BDPG) were introduced to a 3 L reaction vessel, and heating was started while mixing under a nitrogen gas flow. MeOH and water, and the like were removed out of the system by a stripping operation for 1 hour under the conditions of 55 to 85° C and 15 to 20 mmHg. The pressure was restored, 0.31 mL of the hydrosilation catalyst was added, and aging was performed at 55 to 85°C for 2.5 hours, whereupon the reaction was complete. Thereby, n light yellow transparent liquid polyether-polysiloxane block copolymer composition "1552 mm2/s, (25°C)" including the straight chain organopolysiloxane-polyether block copolymer at least containing a structural unit expressed by the average composition formula: 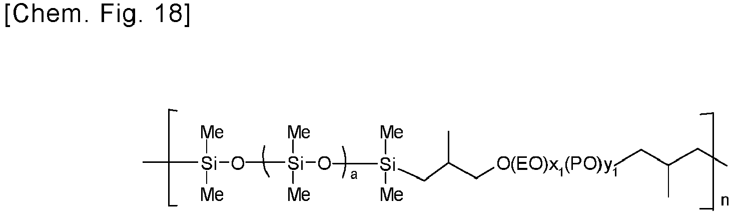
(where a = 20, x1 = 35, y1 = 27, and n ≒ 6) and
BDPG was obtained at a 50:50 ratio.

Note that the average composition formula is simply expressed, but the molar ratio of C=C groups and Si-H groups of raw material C=C/SiH was approximately 1.18; therefore, both terminals of the copolymer have a form blocked by a polyether (= terminal functional group is a methallyl group or hydroxyl group bonded to a polyether). Furthermore, a portion of the Si-H groups in the reaction can cause a dehydrogenative condensation reaction with a hydroxyl group of the BDPG, and the like; therefore, a portion of the copolymer terminal is considered to include a structure of SiO-iPr or SiO-R¹ (R¹ represents a BDPG residual group). Note that herein, a polyether portion is a random adduct of ethylene oxide and propylene oxide. This is common to Comparative Example 6.

### [Comparative Example 6: Excess sodium acetate (=200 wt.ppm)]

The test was conducted similar to Example 5, except that 13.5 g of a MeOH solution of
2 wt.% sodium acetate (200 wt.ppm of sodium acetate to BDPG) was used instead of 2.70 g of a MeOH solution of 2 wt.% sodium acetate, and the stripping time for MeOH, water, and the like was 3 hours. A light yellow transparent liquid polyether-polysiloxane block copolymer composition "1193 mm²/s, (25°C)" was obtained.

### [SUMMARY]

Table 3 below summarizes the test results.

**[Table 3]**

| Test No. | Reactivity | Viscosity (% change) | n | T% | Buffer [ppm] | Na [ppm] | Buffer name and supplementar y information | BDPG | Bismethalyl polyether |
|---|---|---|---|---|---|---|---|---|---|
| Example 4-1 | Excellent | 1862 (- 1.5) | 6 | >90 | 20 | 5.5 | CH₃COONa (Finely Dispersed State) | Company L | a1-4 |
| Example 4-2* | Excellent | 1891 (± 0) | 6 | >90 | 40 | 11.0 | Same as above | Company L | |
| Example 4-3 | Excellent | 1862 (- 1.5) | 6 | >90 | 100 | 27.7 | Same as above | Company L | |
| Comparative Example 5 | Excellent | 624 (- 67.0) | <6 | >90 | 0 | 0 | Absent | Company L | |
| Example 5 * | Excellent | 1552 (± 0) | 6 | 96 | 40 | 11.0 | CH₃COONa (Finely Dispersed State) | Company L | a1-5 |
| Comparative Example 6 | Excellent | 1193 (- 23.0) | <6 | 99 | 200 | 55.4 | Same as above | Company L | |

| | | | | | | | | | |
|---|---|---|---|---|---|---|---|---|---|
| *Treated as the reference product in a series of tests, a viscosity change rate of -5% was set as the "target level" when the same bismethalyl polyether raw material was used. | | | | | | | | | |

In Examples 4-1 to 4-3 and Example 5, compositions with sufficient viscosity for practical use could be obtained even when Company L BDPG with a slightly higher acid value was used. On the other hand, in Comparative Example 5, where sodium acetate was not used as a buffer, side reactions were not sufficiently suppressed, and only a low viscosity product was obtained. Even when the amount of buffer was sufficient to neutralize the acidic substances in the BDPG of Company L, the viscosity of the composition decreased in Comparative Example 6. This suggests that excess amounts of sodium acetate may cause side reactions, and the amount of sodium acetate added has technical significance. Based on the graph in FIG. 1 above, the amount of sodium acetate added that gives the resulting polyether-polysiloxane block copolymer composition an absolute viscosity change rate smaller than the above target level (-5% viscosity change rate relative to the reference product) was in a range of 3.8 to 43 ppm, calculated as sodium ions, with regard to the BDPG. Based on the actual values, the upper and lower limits were determined for the added amount of the specific sodium salt of the present invention.

The analysis results using ²⁹Si NMR on samples from Example 2 and Example 3 of the present invention, as well as Comparative Example 3, and Comparative Example 4-1 for the present invention showed the average structural information of the polyether-polysiloxane block copolymer (A'), which is the main component in the obtained compositions. Note that the average structure (mass ratio) in Table 4 is shown by a molar ratio of 2 as the sum of the terminal groups of component (A').

[Table 4]: ²⁹Si NMR analysis results of Example 2, Example 3, Comparative Example 3, and Comparative Example 4-1

**[Table 4]**

| Structural unit | Example 2 | Comparative Example 3 | Example 3 | Comparative Example 4-1 |
|---|---|---|---|---|
| M^{R} | 1.97 | 1.97 | 1.97 | 1.96 |
| M^{OX} | 0.030 | 0.030 | 0.030 | 0.04 |
| D | 20.1 | 19.6 | 19.9 | 19.8 |

| | | | | |
|---|---|---|---|---|
| R = -CH₂CHMeCH₂O(EO)ₓ₁(PO)_{y1}-, OX = OH or alkoxy group | | | | |

²⁹Si NMR did not clearly detect any differences in the average chemical structure of the main components in the examples and comparative examples, and all appear to have been synthesized generally normally.

The following is a summary of the GPC (detector: refractometer) analysis results of the chloroform eluent for the samples from Example 2, Example 3, Comparative Example 3, and Comparative Example 4-1. Here, the average molecular weight is calculated based on a polystyrene equivalent.

[Table 5]: GPC data for each of the samples (designed degree of polymerization of the copolymer n = 6)

**[Table 5]**

| Sample | Peak Number, Shape of Copolymer | Number average molecular weight of copolymer | Peak Area Ratio % of Unreacted Methallyl Polyether with Regard to Copolymer |
|---|---|---|---|
| Example 2 | One peak | 37,300 | 10.8 |
| Comparative Example 3 | One peak | 37,500 | 12.0 |
| Example 3 | One peak | 37,900 | 11.0 |
| Comparative Example 4-1 | One peak | 36,100 | 12.9 |

On the other hand, when BPDG and GPC having a secondary hydroxyl group were used as the reaction solvent, all four samples provided a copolymer with a molecular weight exceeding 30,000, used as measure for exhibiting performance as a foam stabilizer for polyurethane microcellular foam was obtained, and the ratio of unreacted and remaining polyethers containing a methallyl group on both terminals was low. However, in Comparative Example 4-1, the copolymer peak was slightly shifted to the low molecular weight side compared to the other three points, and the remaining ratio of unreacted polyether was also higher.

### [Example 6]

The same lot as in Example 5 was used for the methylhydrogenpolysiloxane, bismethallyl polyether, and (B') BDPG (Company L), and the same production procedures as in Example 5 were used to scale up the input of each raw material so that the total amount of main raw material was approximately 3.5 t, and a factory production test was conducted in a 4 m³ reactor. The production system in the factory was not as clean as in the lab tests, and the hydrosilylation reaction took more time, but when the reaction was almost complete, the product was a clear pale-yellow liquid and met the viscosity target. The material was then filtered through a zeta-potential adsorption filtration filter. A light yellow transparent liquid polyether-polysiloxane block copolymer composition with a light transmissivity (580 nm) = 97% was obtained at "1557 mm²/s, (25°C)".

### [Example 7: Filtered product from Example 2]

The polyether-polysiloxane block-copolymer composition 100g obtained in the aforementioned Example 2 was filtered through a zeta-potential-type adsorption filter having a diameter of 90mm to obtain 80.3g of a pale yellow transparent uniform filtrate. Thus, the light transmittance T% (580nm) of the composition was improved from 78% before filtration to 97% after filtration.

### [Additional Performance Evaluation as Foam Stabilizer and Significance of Filtered Product]

Example 6, which was an industrial scale filtered product, and Example 7, which was a filtered product of the aforementioned Example 2 were prepared, and the "foam retention test" was performed using a homo-disper mixer described below to evaluate the performance of the compositions according to Examples and the like in more detail. Furthermore, the occurrence of appearance change was evaluated.

### [Foam Retention Test]

Samples of the aforementioned Example 2, Example 7, Example 6, and Comparative Example 4-2 were tested for foam retention capability as a surfactant by the following procedure using a homodispering mixer. In order to increase the stirring force, the direction of the blade of the disperser was fixed to be opposite to the direction of rotation.

### [Procedures]

1. The foam stabilizer sample 30 g is placed in a clean 200 mL wide-mouthed glass bottle and allowed to stand.
2. Height of the sample liquid level is measured and recorded. A line is drawn along the meniscus with an oil-based marker, and the height of the upper end of the line is treated as the initial height of the liquid surface. Generally, the lower end of the line is located at 18 mm from the bottom of the bottle and the upper end of the stopper is located at 20 mm from the bottom of the bottle.
3. The blade of the homodisperser is immersed in the central part of the liquid, and the height is set at a slightly higher position so that the blade does not touch the bottom of the glass bottle.
4. The glass bottle containing the sample is secured by clamping.
5. Stirring is performed at 3000 rpm using the homodisperser for 2 minutes.
6. When the stirring is stopped, the blade is moved to a position higher by approximately 1 cm so as not to come into contact with the foam liquid, secured in place, and then spun empty for a short time to remove the liquid adhering to the blade.
7. The glass bottle is removed, the foam height (top) is marked with an oil-based marker, and the difference [cm] in height from the initial height is determined. Whether the foam retention was good or bad was determined by the magnitude of this value.

Note) Procedures 6 and 7 were performed in a short time of approximately 30 seconds. However, it was found by observation after the test that the height of the generated foam had almost no change in approximately 3 to 5 minutes.

The long-term storage stability of the above samples at room temperature was evaluated by measuring appearance and light transmittance.

Furthermore, the Na [ppm] was measured for the above samples by the "acid decomposition - ICPMS method". Analytical values were obtained as the average of two measurements.

Table 6 below summarizes the test results for foam retention, storage stability, and Na content.

[Table 6]: Relationship between foam retention, storage stability and Na content of samples

**[Table 6]**

| No. | Appearance (months elapsed, T%-wavelength 580 nm) | | Foam retention [mm] | Na [ppm] * |
|---|---|---|---|---|
| | Initial | Over time 1 | | |
| Example 2 | Pale yellow almost transparent homogeneous liquid (0M, 78%) | Same as left (5M, 80%) | + 3.0 | 7.5 |
| Example 7 (After filtration) | Light yellow, transparent, uniform liquid (0M, 97%) | Same as left (>7M, 97%) | + 5.0 | 1.1 |
| Example 6 (Filtered product) | Light yellow, transparent, uniform liquid (0M, 97%) | Same as left (>7M, 97%) | + 6.5 | 4.3 |
| Comparative Example 4-2 | Pale yellow almost transparent homogeneous liquid (0M, 77%) | Same as left (3M, 75%) | + 1.5 | No Analysis (No additives) |

| | | | | |
|---|---|---|---|---|
| *Analytical values quantified by ICPMS method | | | | |

Table 6 shows that the composition containing the polyether-polysiloxane block copolymer (A') obtained by the manufacturing method of the present invention does not cause any separation or other inconvenience even without filtration and maintains the properties of a uniform liquid (Example 2). However, an unexpected benefit was found in that the appearance stability was further improved, and even foam retention was improved by filtration (Example 7). Comparative Example 4-2, to which no sodium salts were added, was highly viscous and generally should have had favorable properties as a foaming agent, but a similar effect was not observed. On the other hand, Example 7, in which the sodium ion content was reduced by filtration, had superior foam retention compared to Example 2, which contained the same polymer component. The relationship between the sodium content [ppm] in the composition and the foam retention of the polyether-polysiloxane block copolymer composition [cm] was plotted in FIG. 2.

In FIG. 2, the target value for foam retention was set at 4.0 cm. From this graph, the range of sodium content to achieve the target level of foam retention of the polyether-polysiloxane block copolymer composition was determined to be approximately 0.6 to 6.7 wt.% of the composition (in particular, the sum of component (A") and component (B)). This range has critical significance, and it was confirmed that, unlike the sodium content in the manufacturing process, controlling the sodium content in the final composition to the aforementioned range can provide a new function of foam enhancement, which is completely different from the effect as a buffer.

Furthermore, the samples of Example 7 and Comparative Example 4-2 were mixed with polypropylene glycol (average molecular weight 425, abbreviated PPG-425), a type of polyether polyol, to prepare a premix solution. At this time, the mass ratio sample:PPG = 6.0 g:24.0 g was used, so the concentration of the polyether-polysiloxane block copolymer (A') in the solution was 10 wt.%. These are, in order, Example 8 and Comparative Example 7.

The premix solutions were tested for foam retention according to the Foam Retention Test and Procedures described above. At this time, PPG - 425 (30 g) without foam stabilizer was also tested as a reference sample. The results are summarized in the following Table 7. The rate of increase in the foam volume [%] in the table was calculated based on the data of Comparative Example 5 (as 0).

[Table 7]: Foam retention of premix solution

**[Table 7]**

| No. | Pre-mix appearance | Foam retention [mm] | Foam volume increase ratio [%] | Foam stabilizer (Viscosity @ 25C) | Na [ppm] Antifoaming agent |
|---|---|---|---|---|---|
| Example 8 | Transparent homogeneous liquid | + 16.5 | + 230 | Example 7 (1714mm²/s) | 1.1 |
| Comparative Example 7 | Nearly transparent to semi-transparent uniform liquid | + 5.0 | (± 0) | Comparative Example 4-2 (7300cP) | No Analysis (No additives) |
| Reference sample | Transparent homogeneous liquid (PPG only) | + 0.5 | NA | Absent | NA |

Comparative Example 7 used the foaming agent composition of Comparative Example 4-2, which provided extremely high viscosity and was generally considered to have favorable properties as a foaming agent, and this was found to provide practically effective performance in this test. However, the premix solution of Example 8 with the foam conditioner of Example 7, which had a much lower viscosity, exhibited even better foaming performance and foam retention properties as compared to Example 7, and the polyether-polysiloxane block copolymer containing a very limited amount of monovalent sodium carboxylate provided a foam-enhancing effect in the composition that was greater than the viscosity and molecular weight of the polymers.

### [Examples 9 to 11: Compositions containing Component (C) and Compatibility Evaluation thereof]

In the following tests, the compatibility of the sample from Example 6 (hereafter referred to as the "Ex sample" or "Ex") with various polyether polyols and polyglycol derivatives was evaluated. Those with excellent compatibility to the Ex sample can be used as diluents for the "composition containing polyether-polysiloxane block copolymer (A')" obtained by the manufacturing method of the present invention, and constitute a foaming agent for polyurethane foam according to the present invention. Alternatively, these can be considered to be suitable as a base polyol for a premix solution for urethane foam in which the compositions of the present invention are blended. As another effect of these diluents, the hydroxyl value of the foam stabilizer can be adjusted, thereby making it possible to control the influence on the pre-designed strength or crosslinking density of the polyurethane foam. Further, this is effective for controlling the air permeability and cell size of the foam. Here, Examples 9 to 11 were evaluated as follows.

### Example 9: Compatibility evaluation test between Ex sample and polyethermonool (C1)

### Example 10: Evaluation test of compatibility between Ex sample and polyetherdiol (C2)

### Example 11: Evaluation test of compatibility between Ex sample and polyethertriol (C3)

### [Compatibility Evaluation Test]

A total of 10 g of the Ex sample and component (C) were introduced into a 25 mL screw pipe at three blending ratios of Ex / C = 5. 0 g / 5. 0 g, 2. 0 g / 8.0 g, and 0.5 g / 9.5 g, and a compatibility test : visual confirmation of the liquid appearance was performed according to the following procedure.

### [Procedures]

1. The screw pipe was capped and shaken well up and down approximately 10 times, and then left to stand in a thermostatic bath at 50°C for approximately 10 to 15 minutes to substantially eliminate air bubbles.
2. After recording the appearance at 50°C, the screw pipe was removed and allowed to return to room temperature.
3. After the appearance at room temperature was recorded, a sample whose appearance was cloudy and non-uniform was left to stand for one night for follow-up. A sample having a translucent to transparent appearance but being visually uniform was left to stand in a refrigerator at 5°C for 1 to 2 hours, and a change in appearance was observed.
4. The appearance of the sample in the refrigerator at 5°C was recorded, then the screw pipe was removed and allowed to return to room temperature. In addition, an evaluation is performed as to whether the appearance at room temperature is significantly different from the appearance record (room temperature) of procedure 3.
5. The appearance of the cloudy sample in procedure 3 was recorded after standing for one night.

Note that the appearance evaluation was recorded according to the following criteria.
* An intermediate case between the two cases is indicated by "~".
⊚: Clear homogeneous liquid
○: Transparent or nearly transparent, uniform liquid
△: Translucent homogeneous liquid
X: Opaque cloudy liquid

### Example 9: Evaluation test of compatibility with polyethermonool (C1)

Table 8 shows the results of evaluating the compatibility between the Ex sample and polyethermonool (C1) having the structures and molecular weights shown in Table 8 below.

**[Table 8]**

| <Example 9> | Ex/C1 = 50/50 | Ex/C1 = 20/80 | Ex/C1 = 5/95 |
|---|---|---|---|
| C1 structure | (A')/(B')/C1 | (A')/(B')/C1 | (A')/(B')/C1 |
| Average molecular weight/EO wt.% | = 25/25/50 | = 10/10/80 | = 2.5/2.5/95 |
| Example 9-1 | 50°C: ⊚ | 50°C: ⊚ | 50°C: ⊚ |
| Bu-O(PO)_{4.5}-H | 20°C: ⊚ | 20°C: ⊚ | 20°C: ⊚ |
| Mw: 340 / 0 | 5°C: ⊚ | 5°C: ⊚ | 5°C: ⊚ |
| Example 9-2 | 50°C: ⊚ | 50°C: ⊚ | 50°C: ⊚ |
| Bu-O(EO)_{4.8}(PO)_{3.7}-H | 20°C: ⊚ | 20°C: ⊚ | 20°C: ⊚ |
| Mw: 500 / 50 | 5°C: ⊚ | 5°C: ⊚ | 5°C: ⊚ |
| Example 9-3 | 50°C: ⊚ | 50°C: ⊚ | 50°C: ⊚ |
| Bu-O(EO)_{10.5}(PO)_{8.0}-H | 20°C: ⊚ | 20°C: ⊚ | 20°C: ⊚ |
| Mw: 1000 / 50 | 5°C: ⊚ | 5°C: ⊚ to ○ | 5°C: ⊚ |
| Example 9-4 | 50°C: ⊚ | 50°C: ○ | 50°C: ⊚ to ○ |
| Bu-O(PO)₃₈-H | 20°C: ⊚ | 20°C: Δ | 20°C: ○ |
| Mw: 2300 / 0 | 5°C: ⊚ to ○ | 5°C: Δ to X | 5°C: ○ |
| Example 9-5 | 20°C: X | 20°C: X | 20°C: X |
| BU-O(EO)₃₃(PO)₂₅-H | After 1 night: | After 1 night: | After 1 night: |
| Mw: 3000 / 50 | separation (gumming up) | separation (gumming up) | separation (gumming up) |
| Example 9-6 | 20°C: X | 20°C: X | 20°C: X |
| Me-O(EO)₈₄-H | After 1 night: | After 1 night: | After 1 night: |
| Mw: 400 / 100 | separation (gumming up) | separation (gumming up) | separation (gumming up) |

| | | | |
|---|---|---|---|
| Note that in the structure of C1 in Table 8, the EO chain and the PO chain are shown in block form for simplicity, but they are actually random copolymers. | | | |

### Example 10: Evaluation test of compatibility with polyetherdiol (C2)

Table 9 shows the results of evaluating the compatibility of the Ex samples with polyetherdiols (C2) having the structures and molecular weights shown in Table 9 below.

**[Table 9]**

| <Example 10> | Ex/C2 = 50/50 | Ex/C2 = 20/80 | Ex/C2 = 5/95 |
|---|---|---|---|
| C2 structure | (A')/(B')/C2 | (A')/(B')/C2 | (A')/(B')/C2 |
| Average molecular weight/EO wt.% | = 25/25/50 | = 10/10/80 | = 2.5/2.5/95 |
| Example 10-1 | 50°C: ⊚ | 50°C: ⊚ | No data |
| HO-(PO)_{11.7}-H | 20°C: ⊚ | 20°C: ⊚ | |
| Mw: 700 / 0 | 5°C: ⊚ | 5°C: ⊚ | |
| Example 10-2 | 50°C: ⊚ | 50°C: ⊚ | 50°C: ⊚ |
| HO-(PO)₃₄-H | 20°C: ⊚ | 20°C: ⊚ | 20°C: ⊚ |
| Mw: 2000 / 0 | 5°C: ⊚ | 5°C: ⊚ to ○ | 5°C: ⊚ to ○ |
| Example 10-3 | 50°C: ⊚ | 50°C: Δ to X | 50°C: Δ |
| HO-(PO)₆₉-H | 20°C: ○ | 20°C: Δ to X | 20°C: Δ |
| Mw: 4000 / 0 | 5°C: Δ to X | 5°C: Δ to X | 5°C: Δ |
| Example 10-4 | 20°C: X | 20°C: X | 20°C: X |
| HO(EO)₂₀(PO)₁₅-H | After 1 night: | After 1 night: | After 1 night: |
| Mw: 1750 / 50 | separation (gumming up) | separation (gumming up) | separation (gumming up) |

| | | | |
|---|---|---|---|
| Note) Regarding the structure of C2 (Comparative Example 9-1) in Table 9, the EO chain and the PO chain are represented as block type for simplicity, but they are actually random copolymers. | | | |

### Example 11: Evaluation test of compatibility with polyethertriol (C3)

Table 10 shows the results of evaluating the compatibility between the Ex samples and polyethertriols (C3) having the structures and molecular weights shown in Table 10 below.

**[Table 10]**

| <Example 11> | Ex/C3 = 50/50 | Ex/C3 = 20/80 | Ex/C3 = 5/95 |
|---|---|---|---|
| C3 structure | (A')/(B')/C3 | (A')/(B')/C3 | (A')/(B')/C3 |
| Average molecular weight/EO wt.% | = 25/25/50 | = 10/10/80 | = 2.5/2.5/95 |
| Example 11-1 | 50°C: ⊚ | 50°C: ⊚ | 50°C: ⊚ to ○ |
| PO mono-additive polymer of glycerin | 20°C: ⊚ | 20°C: Δ to X | 20°C: Δ |
| Mw: 1000 / 0 | 5°C: ⊚ | 5°C: Δ to X | 5°C: Δ |
| Example 11-2 | 50°C: ⊚ | 50°C: ⊚ to ○ | 50°C: ⊚ to ○ |
| PO mono-additive polymer of glycerin | 20°C: ⊚ | 20°C: Δ to X | 20°C: ○ |
| Mw: 3000 / 0 | 5°C: ⊚ | 5°C: Δ to X | 5°C: ○ to Δ |
| Example 11-3 | 50°C: ⊚ | 50°C: Δ | 50°C: Δ |
| PO mono-additive polymer of glycerin | 20°C: ⊚ | 20°C: Δ to X | 20°C: Δ |
| Mw: 4000 / 0 | 5°C: Δ | 5°C: Δ to X | 5°C: Δ |
| Example 11-4 | 20°C: X | 20°C: X | 20°C: X |
| EO/PO additive polymer of glycerin | After 1 night: | After 1 night: | After 1 night: |
| | separation (gumming up) | separation (gumming up) | separation (gumming up) |
| Mw: 2800 / 50 | | | |

| | | | |
|---|---|---|---|
| Note that the C3 structure (Comparative Example 10-1) in Table 10 is an EO/PO random co-polymer. | | | |

### [Component (C1)]

As shown in Table 8, when a polyether monool was used as a diluent, in the case of a single addition polymer of PO (propylene oxide), the compatibility with the component (A ') was generally maintained even when the number of moles added was close to 40 and the chain was long, and the stability of the mixed solution was good. On the other hand, in the case of an addition copolymer of EO (ethylene oxide) and PO, as a result of comparison at a constant EO wt.% = 50 and a molecular weight of 500, 1000, 3000, the stability was extremely deteriorated in the last case where the total number of moles of EO added exceeded 30. Further, since the addition polymerization product of EO alone is not compatible with the component (A') at all, it was also revealed that the polymerization unit of PO is necessary in the structure of the polyether monool.

From these results, it was estimated that when the polyether monool was used as a diluent, the upper limit of the number of moles of EO added was approximately 20, the upper limit of the number of moles of PO added was approximately 50, and the upper limit of the wt.% of EO in the structure was approximately 60. According to the experience of the present inventors, when the wt.% of EO in the polyether monool is 70 or more, the freezing point rises, and the polyether monool itself tends to cause precipitation or white turbidity in appearance at low temperatures in winter. Therefore, the upper limit of the wt.% of EO in the case of using the polyether monool as a diluent in the present invention was set to approximately 60.

### [Component (C2)]

As shown in Table 9, when polyether diol was used as a diluent, in the case of a single addition polymer of PO (propylene oxide), the compatibility with component (A ') was very good even if the number of moles added became a long chain of approximately 35, and the stability of the mixed liquid was also good. When the number of moles of PO added is around 70, a decrease in compatibility is observed. However, under conditions where the concentration of the component (A') is high (Ex/C2 = 50/50), the mixture is stable within an allowable range, and it is considered that the mixture can be used as a foam stabilizer. On the other hand, as an addition copolymer of EO (ethylene oxide) and PO, one having EO wt.% = 50 and a molecular weight of 1750 was tested, but it was found that the stability was extremely deteriorated.

From these results, it was estimated that when polyether diol is used as a diluent, the upper limit of the number of moles of EO added is around 10, the upper limit of the number of moles of PO added is around 70, and the upper limit of the wt.% of EO in the structure is around 30.

### [Component (C3)]

As shown in Table 10, it was confirmed that the compatibility of polyethertriol with the composition of the present invention which primarily contains Component (A') and component (B') tended to be slightly lower than that of polyetherdiol or polyether monool. In the case of polyethertriol which is a single addition polymer of PO, the compatibility was insufficient at the bending ratio of Ex/C3 = 20/80. However, under conditions where the concentration of component (A') is high (Ex/C3 = 50/50), the stability of the mixture is within an acceptable range, and it is considered that the mixture can be used as a foam stabilizer. In addition, even under the condition of Ex/C3 = 5/95 where the concentration of the component (A') was low (assuming the situation of the premix liquid for polyurethane foam), the stability of the mixed liquid was within the allowable range. On the other hand, as an addition copolymer of EO (ethylene oxide) and PO, one having EO wt.% = 50 and a molecular weight of 2800 was tested, but it was found that the stability was extremely deteriorated.

From these results, it was estimated that when the polyether triol was used as a diluent, the upper limit of wt.% of EO in the structure was around 20, and the range of the average molecular weight was approximately 500 to 4500.

### [Summary]

The above examples and the like show that by using the manufacturing method that includes the improved hydrosilylation reaction process, including Steps 1 to 3, the production efficiency of the composition containing the polyether-polysiloxane block copolymer (A') and the foaming agent using it can be significantly improved when a glycol ether compound (B') with low cost and high acid value is used as a raw material, and the technical effect of the method can solve quality problems. The production efficiency of compositions containing polysiloxane block copolymers (A') and foaming agents using these can be significantly improved and their quality issues can be solved, even when raw materials such as bismetharyl polyethers, which vary in quality, are used, and the technical effect was confirmed to have good reproducibility even when raw materials such as bismethalyl polyethers, which vary in quality, are used.

In particular, the present invention provides a suitable buffer component or buffer agent that can provide the same quality as when a glycol ether compound (B') with a very low acid value and high price is used as a raw material, even if an inexpensive glycol ether compound (B') is used. The purpose is to clarify a suitable buffer system and a suitable range of addition amount of the buffer, and to provide a suitable manufacturing method of the (AB)n-type polyether-modified silicone compositions utilizing the buffer.

Furthermore, it was confirmed that the present invention can provide a composition containing polyether-polysiloxane block copolymers (A") with a specific structure, wherein if the amount of glycol ether compounds (B') and sodium salts are within a very limited range, a foam-enhancing composition can be obtained, which is different from the conventional technical effect of using a sodium salt as a buffer. Similarly, the present inventors have found that a suitable combination of the composition according to the present invention and the component (C) and a compatibility relationship therebetween are sufficient for practical use.

From the above test results, it is understood and expected that the present invention can provide a polyether-polysiloxane block copolymer composition which can solve the conventional problems of quality and process by a simple means and can be stably supplied to the market at a low cost in a large amount, an improved method for manufacturing the composition, the composition excellent in cost in use and foam-enhancing properties, and a foam stabilizer for polyurethane foams containing the composition.

## Claims

1. A method of manufacturing a composition containing a polyether-polysiloxane block copolymer (A') having structural units expressed by the following general formula (3): 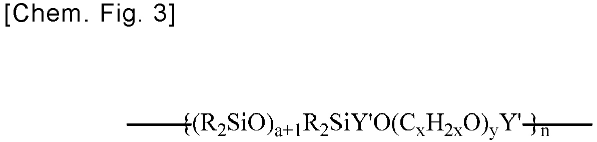
(where R has the same meaning as described below, a, x, and y are the same numbers as described below, n is at least 2, Y' represents a bivalent hydrocarbon group with 2 to 8 carbon atoms bonded to a polyoxyalkylene block by an oxygen atom and an adjacent silicon atom by a carbon-silicon bond),
the method comprising:
Step 1: a step of mixing material components including, at least,
(a1) a polyether containing an alkenyl group on both terminals, expressed by the general formula (1)
[Chem. Fig. 1] Y-O(CₓH₂ₓO)_{y}-Y
(where x is a number of 2 to 4, y represents a number such that the molecular mass of the polyether moiety expressed by (CₓH₂ₓO)_{y} is in a range of 400 to 5000, Y represents a monovalent hydrocarbon group having 2 to 8 carbon atoms and having a reactive C = C group at a terminal, and the polyether moiety contains at least one oxypropylene group) and
(N+S) a sodium salt solution containing the following components (N) and (S),
(N) a monovalent sodium carboxylate having 2 to 18 carbon atoms; and
(S) one or more solvents selected from (S1) water and (S2) monovalent saturated alcohols with 1 to 4 carbon atoms; Step 2: a step of removing the solvent (S) from Step 1 out of the system by heating and/or depressurization; and Step 3: a step after Step 2, of performing a hydrosilylation reaction in the presence of
component (a1) described above, and
component (a2) an organopolysiloxane containing an SiH group on both terminals and expressed by General Formula (2) 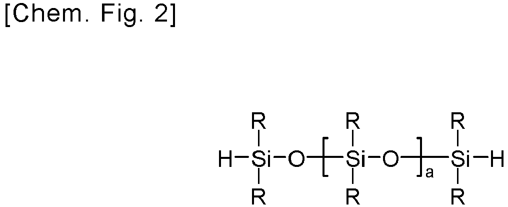
(where, R independently represents a monovalent hydrocarbon group having no aliphatic unsaturated bonds and having 1 to 9 carbon atoms, and a is a number 1 to 200),
the aforementioned component (N),
(B') one or more type of a glycol ether compound where a terminal hydrogen is substituted by a hydrocarbon group with 1 to 8 carbon atoms, a secondary alcoholic hydroxyl group is provided on another terminal, and the repeating number of oxyalkylene units with 2 to 4 carbon atoms is a number within a range of 1 to 3, and a hetero atom other than oxygen is not included, and
an effective amount of a hydrosilylation reaction catalyst;
(However, if the total amount of component (a1), component (a2) and component (B') is 100 parts by weight, the amount of component (B') used shall be in the range of 40 to 80 parts by weight, and the amount of sodium cation (Na+) in component (N) relative to the amount of component (B') used is in a range of 3.8 to 43 wt.ppm).

2. The method of manufacturing a composition according to claim 1, wherein the above Steps 1 to 3 are performed in a single reaction vessel.

3. The method for manufacturing a composition according to claim 1 or claim 2, wherein the aforementioned Step 1 is a step of mixing one or more type of raw material components selected from the aforementioned component (a1), the aforementioned component (N+S), and optionally other raw material components, and wherein component (a2) and the hydrosilylation reaction catalyst are not coexistent in the raw material system in Step 1.

4. The method of manufacturing a compound according to any one of Claims 1 to 3, wherein
Component (A') is a polyether-polysiloxane block copolymer having on a molecule terminal one or more type of functional group selected from:
Z¹: alkenyl groups, hydroxyl groups, alkoxy groups, or acetoxy groups bonded to a polyether portion; and
Z²: monovalent hydrocarbon groups that do not have a hetero atom, hydroxyl groups, alkoxy groups, or a C1 to C8 hydrocarbon oxyalkylene group, bonded to a silicon atom.

5. The method for manufacturing the composition according to any one of claims 1 to 4, further comprising a step of filtering the composition obtained in Step 3 so that the light transmittance (at 580 nm) is 90% or more.

6. A method of manufacturing a composition according to any one of Claims 1 to 5, wherein in the above general formulas (2) and (3), a is a number in a range of 10 to 45, and
in the general formulas (1) and (3), y is preferably a number such that the molecular weight of the polyether moiety expressed by (CₓH₂ₓO) y is in a range of 1500 to 5000, and
the average added amount of oxyethylene units expressed by (C₂H₄O) is within a range of 30 to 80 mass%, based on the entire polyether moiety.

7. The method of manufacturing a composition according to any one of Claims 1 to 6, wherein component (B) is one or two or more types of monool organic compound selected from propylene glycol monobutyl ethers, dipropylene glycol monobutyl ethers, tripropylene glycol monobutyl ethers, propylene glycol monomethyl ethers, dipropylene glycol monomethyl ethers, tripropylene glycol monomethyl ethers, propylene glycol mono(iso)propyl ethers, dipropylene glycol mono(iso)propyl ethers, tripropylene glycol mono(iso)propyl ethers, propylene glycol monoethyl ethers, dipropylene glycol monoethyl ethers, tripropylene glycol monoethyl ethers, 2-butyl-1-octanols, 2-hexyl-1-decanols, 2-octyl-1-dodecanols, isostearyl alcohols, and 2-decyl-1-tetradecanols.

8. The method for manufacturing a composition according to any one of claims 1 to 7, further comprising, after the step 3, a step of adding, mixing and homogenizing (C) a polyether compound compatible with components (A'), (B') and (C) and selected from the following components (C1) to (C3), (however, the amount of component (C) used is such that the amount of the component (A') in the finally obtained composition is 1% by weight or more). (C1) polyether monool represented by the following general formula (4): General Formula (4): 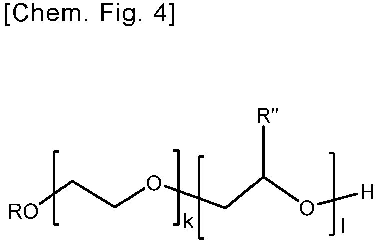 (where R represents a monovalent hydrocarbon group having 1 to 9 carbon atoms and having no aliphatic unsaturated bonds, R" represents a methyl group or an ethyl group, k satisfies the conditions of 0 ≦ k ≦ 20, l satisfies the conditions of 4 ≦ I ≦ 50, and the amount of the oxyethylene moiety in the polyether moiety is 60 wt.% or less) (C2) Polyether diol expressed by general formula (5) below. General Formula (5): 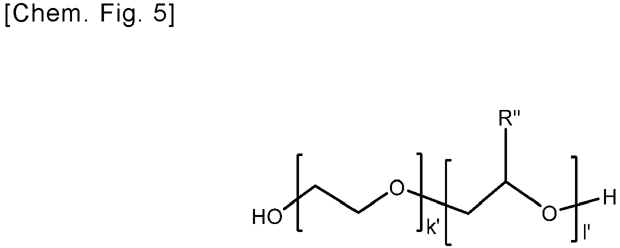 (where R " has the same meaning as defined above, k' satisfies the conditions 0 ≦ k' ≦ 10, l ' satisfies the conditions 4 ≦ I ' ≦ 70, and the weight% of oxyethylene moiety in the polyether moiety is 30 or less) (C3) a polyethertriol containing 20 wt.% or less of an oxyethylene moiety and has an average molecular weight in a range of 500 to 4500, and obtained by addition polymerization of an alkylene oxide having 2 to 4 carbon atoms to glycerin and/or trimethylolpropane.

9. A method for manufacturing a composition according to any one of claims 1 to 8, further comprising a step of adding an antioxidant in the range of 1 to 1000 wt% relative to 100 mass parts of the sum of component (A') and component (B') described above, at an optional timing.

10. A composition, comprising:
(A") a polyether-polysiloxane block copolymer composition having in a molecule structural units expressed by General Formula (1): 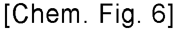 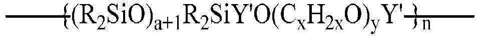
(where each R independently represents a monovalent hydrocarbon group having 1 to 9 carbon atoms without an aliphatic unsaturated bond, x represents a number from 2 to 200, a represents a number from 10 to 45, y is a number in the range from 1500 to 5000 and represents the molecular weight of the polyether moiety expressed by (CₓH₂ₓO)_{y} and is a number such that the average amount of the oxyethylene C₂H₄O) units with regard to the entire polyether moiety is within a range of 30 to 80% by mass, the polyether moiety includes at least one oxypropylene group, and n represents a number that is at least 2, and Y represents a divalent hydrocarbon group having from 2 to 8 carbon atoms, which is bonded to a polyoxyalkylene block by a carbon-silicon bond by a silicon atom and an oxygen atom).
(B1) glycol ether compounds where a terminal hydrogen is substituted by a hydrocarbon group with 1 to 8 carbon atoms, a secondary alcoholic hydroxyl group is provided on another terminal, and the repeating number of oxyalkylene units with 2 to 4 carbon atoms is a number within a range of 1 to 3, and
(N) a monovalent sodium carboxylate having 2 to 18 carbon atoms; and
wherein the mass ratio of components (A") : (B') is in the range of 20 : 80 to 60 : 40, and the sodium cation (Na ⁺⁾ in component (N) is in the range of 0.6 to 6.7wt. ppm based on the sum of components (A') and (B').

11. The composition according to claim 10, further comprising (C) a polyether compound compatible with components (A') and (B') and selected from the following components (C1) to (C3).
(C1) polyethermonool represented by the following general formula (4): 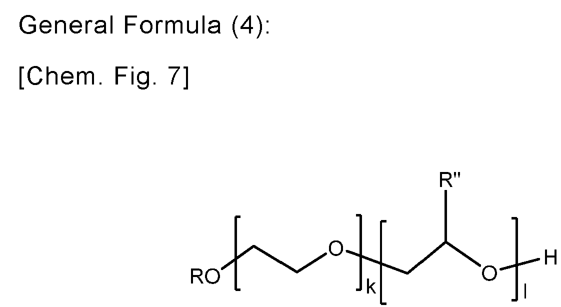
(where R represents a monovalent hydrocarbon group having 1 to 9 carbon atoms and having no aliphatic unsaturated bonds, R" represents a methyl group or an ethyl group, k satisfies the conditions of 0 ≦ k ≦ 20, l satisfies the conditions of 4 ≦ I ≦ 50, and the amount of the oxyethylene moiety in the polyether moiety is 60 wt.% or less)
(C2) Polyether diol expressed by general formula (5) below. 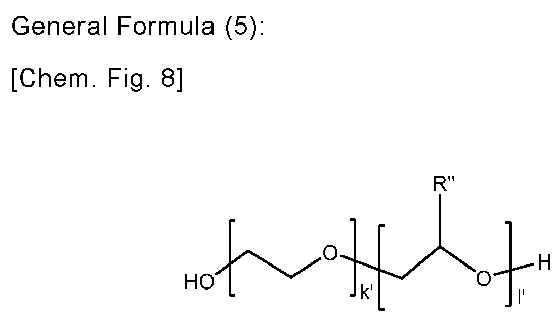
(where R " has the same meaning as defined above, k' satisfies the conditions 0 ≦ k' ≦ 10, l ' satisfies the conditions 4 ≦ I ' ≦ 70, and the weight% of oxyethylene moiety in the polyether moiety is 30 or less)
(C3) a polyethertriol containing 20 wt.% or less of an oxyethylene moiety and has an average molecular weight in a range of 500 to 4500, and obtained by addition polymerization of an alkylene oxide having 2 to 4 carbon atoms to glycerin and/or trimethylolpropane.

12. Use of the composition obtained by the method of manufacturing the composition according to any one of Claims 1 to 9, or the composition according to either claim 10 or claim 11, as a surfactant, a foam stabilizer for polyurethane foam, or a premix liquid for polyurethane foam.

13. A method for producing a surfactant, a foam stabilizer for polyurethane foam, or a premix liquid for polyurethane foam, comprising the method for producing the composition according to any one of claims 1 to 9.

14. A polyurethane foam-forming composition, comprising the composition obtained by the method of manufacturing a composition according to any one of Claims 1 to 9, or a composition according either claims 10 or 11.

15. A polyurethane foam comprising, as a raw material, the composition obtained by the method of manufacturing a composition according to any one of Claims 1 to 9, or the composition according to either Claim 10 or Claim 11.
